(19) Europäisches Patentamt
European Patent Office
Office européen des brevets

(11) **EP 4 589 354 A1**

(12) **EUROPEAN PATENT APPLICATION**
published in accordance with Art. 153(4) EPC

(43) Date of publication:
**23.07.2025 Bulletin 2025/30**

(21) Application number: **23875147.3**

(22) Date of filing: **26.09.2023**

(51) International Patent Classification (IPC):
$G02B\ 13/00$ (2006.01)    $G02B\ 13/18$ (2006.01)
$G03B\ 9/02$ (2021.01)    $G02B\ 3/02$ (2006.01)
$G02B\ 3/00$ (2006.01)    $G02B\ 9/62$ (2006.01)

(52) Cooperative Patent Classification (CPC):
**G02B 3/00; G02B 3/02; G02B 9/62; G02B 13/00;
G02B 13/18; G03B 9/02**

(86) International application number:
**PCT/KR2023/014804**

(87) International publication number:
**WO 2024/076081 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.10.2022 KR 20220126307
22.11.2022 KR 20220157380**

(71) Applicant: **Samsung Electronics Co., Ltd.
Suwon-si, Gyeonggi-do 16677 (KR)**

(72) Inventors:
• **KIM, Haneung
Suwon-si Gyeonggi-do 16677 (KR)**
• **LEE, Hwanseon
Suwon-si Gyeonggi-do 16677 (KR)**

(74) Representative: **HGF
HGF Limited
1 City Walk
Leeds LS11 9DX (GB)**

(54) **LENS ASSEMBLY AND ELECTRONIC DEVICE COMPRISING SAME**

(57)    An electronic device according to an embodiment disclosed in the present document may comprise: a lens assembly; an image sensor including an imaging surface; and/or an optical member. The lens assembly may include at least six lenses sequentially arranged along the optical axis in a direction from the object side to the image side, including a first lens, a second lens, a third lens, a fourth lens, a fifth lens, and/or a sixth lens. The first lens may have positive refractive power. The sixth lens may have positive refractive power. The image side surface of the sixth lens may be concave. The optical member may be disposed between the object side and the imaging surface. The first lens may have a larger central thickness measured with respect to the optical axis than the other lenses.

FIG. 5

**Description**

[Technical Field]

Embodiment(s) of the disclosure relate to a wide-angle lens assembly having a reduced area exposed to the outside of an electronic device and an electronic device including the same.

[Background Art]

Optical devices, for example, cameras capable of capturing images or videos have been widely used. Although film-type optical devices were mainly used in the past, digital cameras or video cameras with solid-state image sensors such as charge-coupled devices (CCDs) or complementary metal-oxide semiconductors (CMOS) have become common in recent years. Optical devices with solid-state image sensors (CCDs or CMOSs) have been gradually replacing film-based optical devices because they allow for easier storage, duplication, and movement of images than the film-based optical devices.

In order to obtain high-quality images and/or videos, an optical device may include an optical system composed of a lens assembly including a plurality of lenses and an image sensor with a high pixel count. The lens assembly may have, for example, a low F number (Fno) and low aberration to obtain a high-quality (high-resolution) image and/or video. To obtain a low F number and low aberration, in other words, to obtain a bright and high-resolution image, multiple lenses needs to be combined. As the image sensor includes more pixels, the pixel count is higher, and an image sensor with a higher pixel count may obtain a high-resolution (high-definition) image and/or video. To implement a high-pixel image sensor in a limited mounting space in an electronic device, a plurality of very small pixels, for example, micrometer-sized pixels may be arranged. Recently, image sensors containing tens of millions to hundreds of millions of micrometer-sized pixels have been mounted on portable electronic devices such as smartphones and tablets. Such high-performance optical devices may have the effect of inducing users to purchase electronic devices.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

An electronic device according to an embodiment of the disclosure may include a lens assembly, an image sensor including an imaging surface, and/or an optical member. The lens assembly may include at least six lenses sequentially arranged along an optical axis in a direction from an object toward an image, and including a first lens, a second lens, a third lens, a fourth lens, a fifth lens L5, and/or a sixth lens. The first lens may have a positive refractive power. The sixth lens may have a positive refractive power. An image-side surface of the sixth lens may be formed to be concave. The optical member may be disposed between the object and the imaging surface. A central thickness of the first lens may be greater than a central thickness of another lens measured with respect to the optical axis. A distance between the optical member and an object-side surface of the second lens may be about 0.6mm to about 1.4mm. The lens assembly may satisfy [Conditional Expression 1] below.

$$[\text{Conditional Expression 1}]$$

$$0.8 < TTL/(IH*\tan(HFOV)) < 2$$

(where in [Conditional Expression 1], 'TTL' is a distance from the object-side surface of the first lens to the imaging surface, 'IH' is a half of a diagonal length of the image sensor, and 'HFOV' is a half angle of view of an entire optical system including the lens assembly and the image sensor.)

A lens assembly according to an embodiment of the disclosure may include at least six lenses sequentially arranged along an optical axis in a direction from an object toward an image, an image sensor including an imaging surface, and/or an aperture. The at least six lenses may include a first lens, a second lens, a third lens, a fourth lens, a fifth lens, and/or a sixth lens. The first lens may have a positive refractive power. An object-side surface of the first lens may be formed to be convex. The sixth lens L6 may have a positive refractive power. An image-side surface of the sixth lens may be formed to be concave. The aperture may be disposed between the object and the first lens. A central thickness of the first lens may be greater than a central thickness of another lens measured with respect to the optical axis. A distance between the aperture and the object-side surface of the second lens may be about 0.6mm to about 1.4mm. The lens assembly may satisfy [Conditional Expression 1] below.

[Conditional Expression 1]

$$0.8 < TTL/(IH*tan(HFOV)) < 2$$

(where in [Conditional Expression 1], 'TTL' is a distance from the object-side surface of the first lens to the imaging surface, 'IH' is a half of a diagonal length of the image sensor, and 'HFOV' is a half angle of view of an entire optical system including the lens assembly and the image sensor.)

[Brief Description of Drawings]

FIG. 1 is a block diagram illustrating an electronic device in a network environment according to an embodiment of the disclosure.

FIG. 2 is a block diagram illustrating an exemplary camera module according to an embodiment of the disclosure.

FIG. 3 is a front perspective view illustrating an electronic device according to an embodiment of the disclosure.

FIG. 4 is a rear perspective view illustrating an electronic device according to an embodiment of the disclosure.

FIG. 5 is a configuration diagram illustrating an optical system including a lens assembly and an image sensor according to an embodiment of the disclosure.

FIG. 6 is a cross-sectional view illustrating a lens barrel and a lens assembly according to an embodiment of the disclosure.

FIG. 7 is a graph illustrating spherical aberration of the lens assembly of FIG. 5 according to an embodiment of the disclosure.

FIG. 8 is a graph illustrating astigmatic field curves of the lens assembly of FIG. 5 according to an embodiment of the disclosure.

FIG. 9 is a graph illustrating distortion aberration of the lens assembly of FIG. 5 according to an embodiment of the disclosure.

FIG. 10 is a configuration diagram illustrating an optical system including a lens assembly and an image sensor according to an embodiment of the disclosure.

FIG. 11 is a graph illustrating spherical aberration of the lens assembly of FIG. 10 according to an embodiment of the disclosure.

FIG. 12 is a graph illustrating astigmatic field curves of the lens assembly of FIG. 10 according to an embodiment of the disclosure.

FIG. 13 is a graph illustrating distortion aberration of the lens assembly of FIG. 10 according to an embodiment of the disclosure.

FIG. 14 is a configuration diagram illustrating an optical system including a lens assembly and an image sensor according to an embodiment of the disclosure.

FIG. 15 is a graph illustrating spherical aberration of the lens assembly of FIG. 14 according to an embodiment of the disclosure.

FIG. 16 is a graph illustrating astigmatic field curves of the lens assembly of FIG. 14 according to an embodiment of the disclosure.

FIG. 17 is a graph illustrating distortion aberration of the lens assembly of FIG. 14 according to an embodiment of the disclosure.

FIG. 18 is a configuration diagram illustrating an optical system including a lens assembly and an image sensor according to an embodiment of the disclosure.

FIG. 19 is a graph illustrating spherical aberration of the lens assembly of FIG. 18 according to an embodiment of the disclosure.

FIG. 20 is a graph illustrating astigmatic field curves of the lens assembly of FIG. 18 according to an embodiment of the disclosure.

FIG. 21 is a graph illustrating distortion aberration of the lens assembly of FIG. 18 according to an embodiment of the disclosure.

FIG. 22 is a configuration diagram illustrating an optical system including a lens assembly and an image sensor according to an embodiment of the disclosure.

FIG. 23 is a graph illustrating spherical aberration of the lens assembly of FIG. 22 according to an embodiment of the disclosure.

FIG. 24 is a graph illustrating astigmatic field curves of the lens assembly of FIG. 22 according to an embodiment of the disclosure.

FIG. 25 is a graph illustrating distortion aberration of the lens assembly of FIG. 22 according to an embodiment of the disclosure.

Throughout the accompanying drawings, like reference numerals may be assigned to like parts, components, and/or structures.

[Mode for Carrying out the Invention]

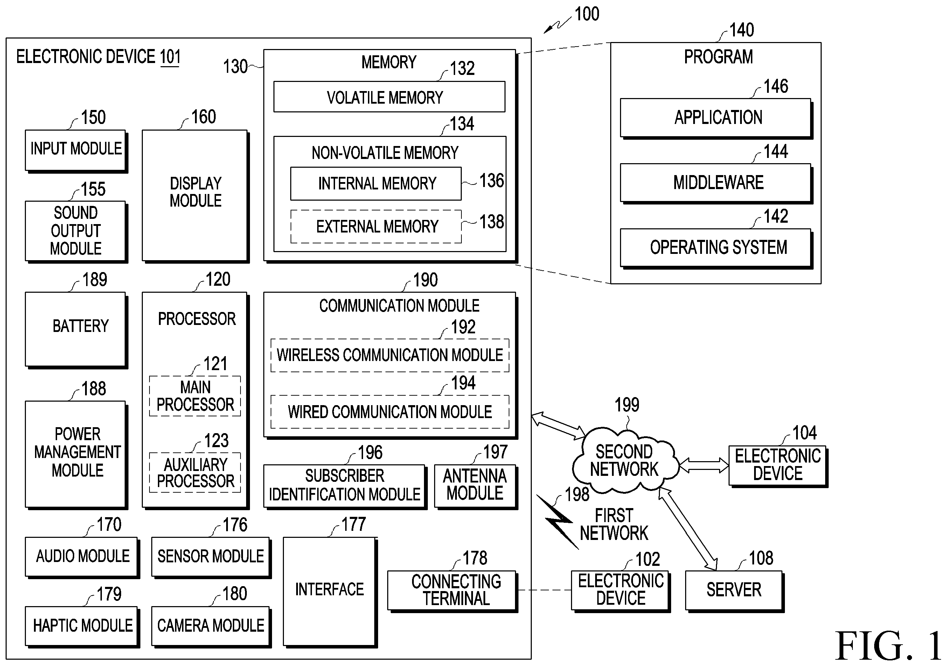

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-

EP 4 589 354 A1

volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

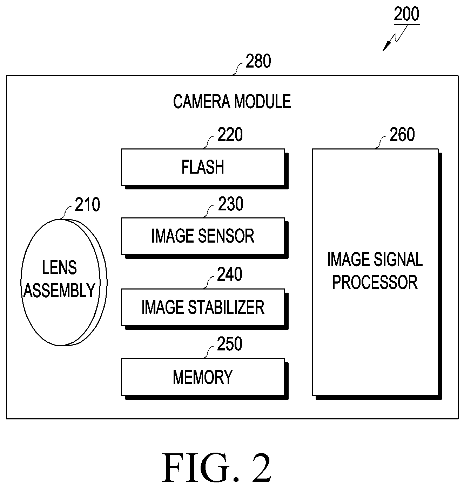

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260.

In an embodiment, the lens assembly 210 may include the image sensor 230. The lens assembly 210 may collect light emitted from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 180 having different attributes or functions. In such a case, at least one of the plurality of camera modules 280 may form, for example, a wide-angle camera and at least another of the plurality of camera modules180 may form a telephoto camera. Similarly, at least one of the plurality of camera modules 280 may form, for example, a front camera and at least another of the plurality of camera modules 180 may form a rear camera.

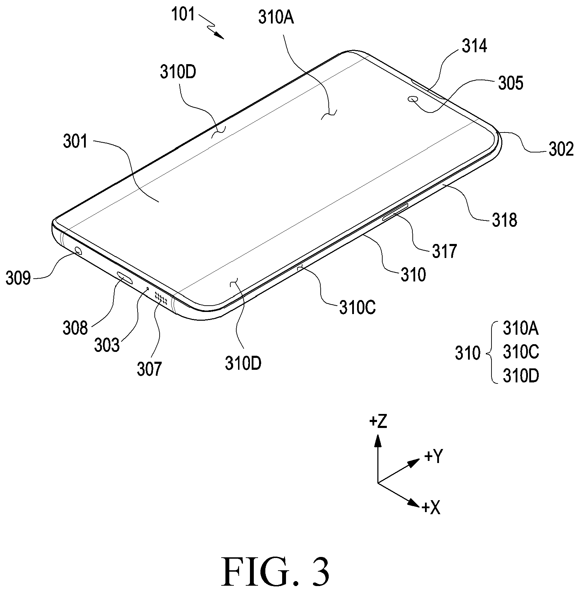

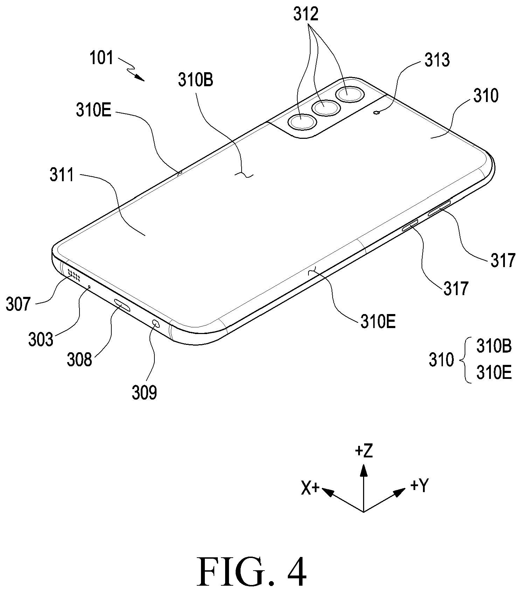

FIG. 3 is a front perspective view illustrating an electronic device according to an embodiment of the disclosure. FIG. 4 is a rear perspective view illustrating the electronic device according to an embodiment of the disclosure.

The configuration of the electronic device 101 in FIGS. 3 and 4 may be wholly or partially the same as that of the electronic device 101 in FIG. 1.

FIG. 3 is a front perspective view illustrating an electronic device according to an embodiment of the disclosure. FIG. 4 is a rear perspective view illustrating the electronic device according to an embodiment of the disclosure.

Referring to FIGS. 3 and 4, the electronic device 101 according to an embodiment may include a housing 310 which includes a front surface 310A, a rear surface 310B, and a side surface 310C surrounding a space between the front surface 310A and the rear surface 310B. In an embodiment (not shown), the housing 310 may refer to a structure that forms a portion of the front surface 310A of FIG. 3, the rear surface 310B of FIG. 4, and the side surfaces 310C. According to an embodiment, at least a portion of the front surface 310A may be formed by a front plate 302 (e.g., a glass plate or polymer plate including various coating layers) which is at least partially substantially transparent. The rear surface 310B may be formed by a rear cover 311. The rear cover 311 may be formed of, for example, glass, ceramic, a polymer, a metal (e.g., aluminum, stainless steel (STS), or magnesium), or a combination of at least two of these materials. The side surface 310C may be coupled to the front plate 302 and the rear cover 311 and formed by a side bezel structure (or "sidewall") 318 including a metal and/or a polymer. In an embodiment, the rear cover 311 and the side bezel structure 318 may be integrally formed and include the same material (e.g., glass, a metal material such as aluminum, or ceramic).

Referring to FIG. 3, according to an embodiment, the front plate 302 may include two first edge areas 310D, which are bent and extend seamlessly from the front surface 310A toward the rear cover 311, at both long edge ends of the front plate 302. Referring to FIG. 4, according to an embodiment, the rear cover 311 may include two second areas edge 310E, which are bent and extend seamlessly from the rear surface 310B toward the front plate 302, at both long edge ends of the rear cover 311. In an embodiment, the front plate 302 (or the rear cover 311) may include only one of the first edge areas 310D (or the second edge areas 310E). In an embodiment, some of the first edge areas 310D or the second edge areas 310E may not be included. For example, when viewed from the sides of the electronic device 101, the side bezel structure 318 may have a first thickness (or width) on a side surface that does not include any of the above first edge areas 310D or second edge areas 310E. For example, when viewed from the sides of the electronic device 101, the side bezel structure 318 may have a second thickness less than the first thickness on a side surface that includes the above first edge areas 310D or second edge areas 310E.

According to an embodiment, the electronic device 300 may include at least one of the display 301, audio modules 303, 307, and 314 (e.g., the audio module 170 in FIG. 1), a sensor module (e.g., the sensor module 176 in FIG. 1), camera modules 305, 312, and 313 (e.g., the camera module 180 in FIG. 1 and/or the camera module 280), key input devices 317 (e.g., the input module 150 in FIG. 1), or connector holes 308 and 309 (e.g., the connecting terminal 178 in FIG. 1). In an embodiment, the electronic device 101 may not be provided with at least one (e.g., the connector hole 309) of the components or may additionally include other components.

The display 301 may be visually exposed, for example, through a substantial portion of the front plate 302. In an embodiment, at least a portion of the display 301 may be exposed through the front surface 310A and the front plate 302 which forms the first edge areas 310D. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

According to an embodiment, a surface (or the front plate 302) of the housing 310 may include a screen display area formed by visually exposing the display 301. For example, the screen display area may include the front surface 310A and the first edge areas 310D.

In an embodiment (not shown), a recess or an opening may be formed in a portion of the screen display area (e.g., the front surface 310A and the first edge areas 310D), and at least one of the audio module 314, the sensor module (not shown), a light emitting element (not shown), or the camera module 305, which is aligned with the recess or the opening, may be included. In an embodiment (not shown), at least one of the audio module 314, a sensor module (not shown), the camera modules 305, a fingerprint sensor (not shown), or a light emitting element (not shown) may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the key input devices 317 may be disposed in the first edge areas 310D and/or the second edge areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314. The audio modules 303, 307, and 314 are not limited to the above structure, and various design modifications may be made, such as mounting only some audio module or adding a new audio module, according to the structure of the electronic device.

According to an embodiment, the sensor module (not shown) may generate an electrical signal or data value corresponding to an internal operating state of the electronic device 101 or an external environmental state. The sensor module (not shown) may include, for example, a first sensor module (e.g., a proximity sensor) and/or a second sensor module (e.g., a fingerprint sensor), disposed on the front surface 310A of the housing 310, and/or a third sensor module (e.g., a HRM sensor) and/or a fourth sensor module (e.g., a fingerprint sensor), disposed on the rear surface 310B of the housing 310. In an embodiment (not shown), the fingerprint sensors may be disposed on the rear surface 310B as well as on the front surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor. The sensor module is not limited to the above structure, and various design modifications may be made, such as mounting only some sensor module or adding a new sensor module, according to the structure of the electronic device.

According to an embodiment, the camera modules 305, 312, and 313 may include a front camera module 305 disposed on the front surface 310A of the electronic device 101, and a rear camera module 312 and/or a flash 313 (e.g., the flash 220 in FIG. 3) disposed on the rear surface 310B. The camera modules 305 and 312 may include one or more lenses, an image sensor (e.g., the sensor module 176 in FIG. 1 and/or the image sensor 230 in FIG. 3), and/or an image signal processor (e.g., the image signal processor 260 in FIG. 3). The flash 313 may include, for example, a light emitting diode (LED) or a xenon lamp. In an embodiment, two or more lenses (an IR camera, a wide-angle lens, and a telephoto lens) (e.g., the lens assembly 210 in FIG. 3) and image sensors may be arranged on one surface of the electronic device 101. The camera modules 305, 312, and 313 are not limited to the above structure, and various design modifications may be made, such as mounting only some camera module or adding a new camera module, according to the structure of the electronic device.

According to an embodiment, the electronic device 101 may include a plurality of camera modules (e.g., a dual camera or a triple camera) each having a different attribute (e.g., angle of view) or function. For example, a plurality of camera modules 305 and 312 including lenses having different angles of view may be configured, and the electronic device 101 may control to change the angles of view of the camera modules 305 and 312 implemented in the electronic device 101, based on a user's selection. For example, at least one of the plurality of camera modules 305 and 312 may be a wide-angle camera, and at least another may be a telephoto camera. Similarly, at least one of the plurality of camera modules 305 and 312 may be a front camera, and at least another may be a rear camera. Additionally, the plurality of camera modules 305 and 312 may include at least one of a wide-angle camera, a telephoto camera, or an IR camera (e.g., a time of flight (TOF) camera or a structured light camera). According to one embodiment, the IR camera may be operated as at least a portion of a sensor module. For example, the TOF camera may be operated as at least a portion of a sensor module (not shown) for detecting a distance to an object.

According to an embodiment, the key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the rear surface 310B of the housing 310.

According to an embodiment, the light emitting element (not shown) may be disposed, for example, on the front surface 310A of the housing 310. The light emitting element (not shown) may provide, for example, state information about the electronic device 300 in the form of light. In an embodiment, the light emitting element (not shown) may provide, for example, a light source interworking with an operation of the front camera module 305. The light emitting element (not shown) may include, for example, an LED, an IR LED, and/or a xenon lamp.

According to an embodiment, the connector holes 308 and 309 may include a first connector hole 308 capable of accommodating a connector (e.g., a USB connector) for transmitting and receiving power and/or data to and from an external electronic device and/or a second connector hole 309 (e.g., an earphone jack) capable of accommodating a connector for transmitting and receiving an audio signal to and from an external electronic device.

In an embodiment, some camera module 305 of the camera modules 305 and 312, and/or some of the sensor modules (not shown) may be disposed to be exposed to the outside through at least a portion of the display 301. For example, the camera module 305 may include a punch hole camera disposed inside a hole or recess formed on the rear surface of the display 301. According to an embodiment, the camera module 312 may be disposed inside the housing 310 such that a lens is exposed to the rear surface 310B of the electronic device 101. For example, the camera module 312 may be disposed on a PCB (e.g., the PCB 340 of FIG. 4).

According to an embodiment, the camera module 305 and/or the sensor module may be disposed so as to be in contact with an external environment through a transparent area from the internal space of the electronic device 101 to the front plate 302 of the display 301. Further, some sensor module 304 may be disposed to perform its function without being visually exposed through the front plate 302 in the internal space of the electronic device.

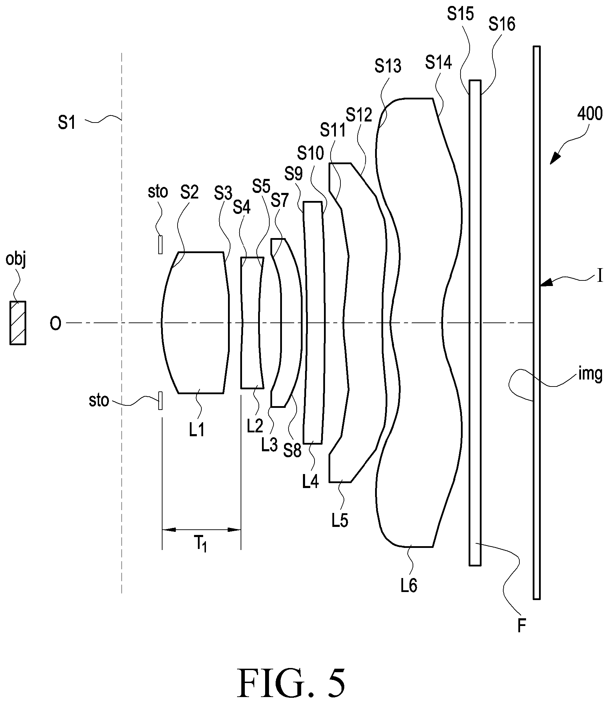

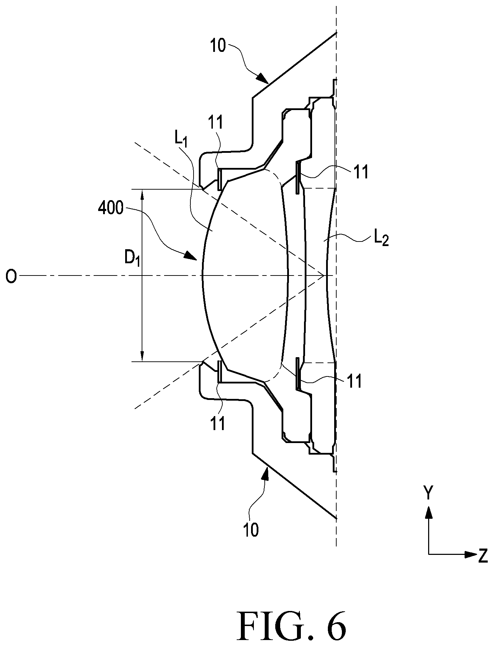

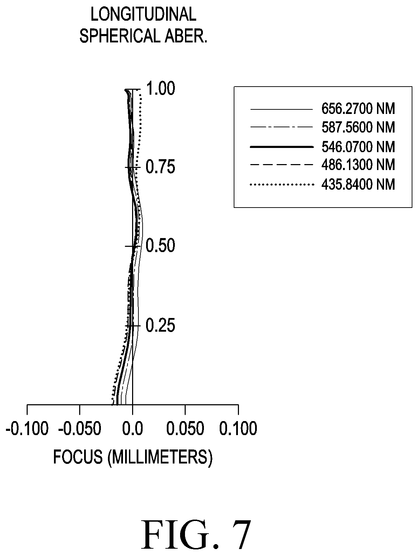

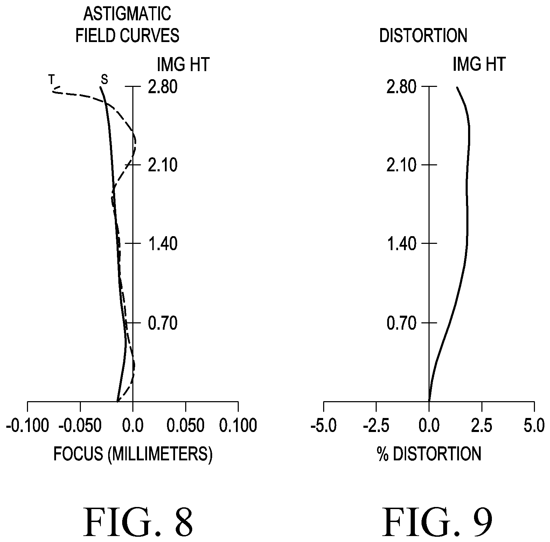

FIG. 5 is a configuration diagram illustrating a lens assembly and an image sensor according to an embodiment of the disclosure. FIG. 6 is a cross-sectional view illustrating a lens barrel and a lens assembly according to an embodiment of the disclosure. FIG. 7 is a graph illustrating spherical aberration of the lens assembly of FIG. 5 according to an embodiment of the disclosure. FIG. 8 is a graph illustrating astigmatic field curves of the lens assembly of FIG. 5 according to an embodiment of the disclosure. FIG. 9 is a graph illustrating distortion aberration of the lens assembly of FIG. 5 according to an embodiment of the disclosure.

FIG. 7 is a graph illustrating the spherical aberration of a lens assembly 400 according to an embodiment of the disclosure, in which a horizontal axis represents coefficients of longitudinal spherical aberration, a vertical axis represents normalized distances from an optical axis O, and variations of the longitudinal spherical aberration according to light wavelengths are illustrated. The longitudinal spherical aberration is shown, for example, for each of light having a wavelength of 656.2700 nanometers (NM), light having a wavelength of 587.5600NM, light having a wavelength of 546.0700NM, light having a wavelength of 486.1300NM, and light having a wavelength of 435.8400NM. FIG. 8 is a graph illustrating the astigmatic field curves of the lens assembly 400 according to an embodiment of the disclosure, for light having the wavelength of 546.0700NM, in which 'S' denotes a sagittal plane and 'T' denotes a tangential plane. FIG. 9 is a graph illustrating distortion aberration of the lens assembly 400 according to an embodiment of the disclosure, for light having the wavelength of 546.0700NM.

Referring to FIGS. 5 to 9, the lens assembly 400 (e.g., the lens assembly 210 of FIG. 2) according to one of various embodiments of the disclosure may include an image sensor I (e.g., the image sensor 230 of FIG. 2), an aperture sto, and/or a plurality of (e.g., at least six) lenses L1, L2, L3, L4, L5, and L6. The image sensor I may include an imaging surface img that receives at least a portion of light incident through the aperture sto and/or focused through the lenses L1, L2, L3, L4, L5, and L6. In an embodiment, the aperture sto, the lenses L1, L2, L3, L4, L5, and L6, and/or the image sensor I may be substantially aligned on the optical axis O. In the disclosure, the phrase "aligned on the optical axis O" may be understood as alignment of an area through which light incident on the imaging surface img of the image sensor I from the aperture sto and/or the lenses L1, L2, L3, L4, L5, and L6 passes, or the imaging surface img of the image sensor (I) on the optical axis O. According to an embodiment, the aperture sto may be disposed between an object obj and a first lens L1, and may be implemented, for example, on one surface (e.g., an object-side surface S2) of the first lens L1.

In an embodiment, the lenses L1, L2, L3, L4, L5, and L6 may include a first lens L1, a second lens L2, a third lens L3, a fourth lens L4, a fifth lens L5, and/or a sixth lens L6 sequentially aligned along the optical axis O from the object obj toward the image sensor I. According to an embodiment, each of the lenses L1, L2, L3, L4, L5, and L6 and/or an IR cut filter F may include an object-side surface directed to the object obj and an image-side surface directed to the image sensor I. For example, the first lens L1 may include an object-side surface S2 and an image-side surface S3. The second lens L2 may include an object-side surface S4 and an image-side surface S5. The third lens L3 may include an object-side surface S7 and an image-side surface S8. The fourth lens L4 may include an object-side surface S9 and an image-side surface S10. The fifth lens L5 may include an object-side surface S11 and an image-side surface S12. The sixth lens L6 may include an object-side surface S13 and an image-side surface S14. According to an embodiment, a portion of the object-side surface S2 of the first lens L1 may be exposed to the outside of a lens barrel (e.g., a lens barrel 10 of FIG. 6) through an opening of the lens barrel.

In an embodiment, at least one of the lenses L1, L2, L3, L4, L5, and L6 may reciprocate along the direction of the optical axis O, and an electronic device (e.g., the electronic device 101 of FIG. 1 and/or the electronic device 101 of FIGS. 3 and 4) or a processor (e.g., the processor 120 of FIG. 1) may perform focus adjustment or focal length adjustment by reciprocating at least one of the lenses L1, L2, L3, L4, L5, and L6. In an embodiment, the lens assembly 400 may be disposed in at least one of the camera modules 305 of FIG. 3 and/or the camera module 312 of FIG. 4.

According to an embodiment, the lens assembly 400 may further include an IR blocking filter F. The IR cut filter F may block light (e.g., IR light) of a wavelength band that is not visible to the user's naked eye but is detected by a film or the image sensor I. In an embodiment, depending on the purpose of the lens assembly 400 or the electronic device (e.g., the electronic device 101 of FIG. 1 and/or the electronic device 101 of FIGS. 3 and 4), the IR cut filter F may be replaced with a bandpass filter that transmits IR light and blocks visible light. For example, in the lens assembly 400 used for detecting IR light or the electronic device 101, the IR cut filter F may be replaced with a bandpass filter that transmits IR light. For example, the IR cut filter F may include an object-side surface S15 and an image-side surface S16.

According to an embodiment, the IR cut filter F and/or the image sensor I may be described as a separate component from the lens assembly 400. For example, the IR cut filter F and/or the image sensor I may be mounted on the electronic device (e.g., the electronic device 101 of FIG. 1 and/or the electronic device 101 of FIGS. 3 and 4) or an optical device (e.g., the camera module 180 of FIG. 1, the camera module 280 of FIG. 2, and/or the camera modules 305, 312, and 313 of FIGS. 3 and 4), and the plurality of lenses L1, L2, L3, L4, L5, and L6 forming the lens assembly 400 may be mounted on the electronic device or the optical device in a state in which the IR cut filter F and/or the image sensor I are aligned along the optical axis O.

Referring to FIG. 6, in an embodiment, the electronic device (e.g., the electronic device 101 of FIG. 1 and/or the electronic device 101 of FIGS. 3) and/or the optical device (e.g., the camera module 180 of FIG. 1, the camera module 280 of FIG. 2, and/or the camera modules 305, 312, and 313 of FIGS. 3 and 4) may include a lens barrel 10 and/or a film mask 11. For example, FIG. 6 may illustrate a portion 400 (e.g., the first lens L1 and the second lens L2) of the lens assembly, which is disposed within the lens barrel 10.

In an embodiment, the electronic device (e.g., the electronic device 101 of FIG. 1 and/or the electronic device 101 of FIGS. 3 and 4) may include a front camera (e.g., the first camera device 305 of FIG. 3). For example, the front camera 305 may be disposed to receive light through a camera exposure area. The camera exposure area may be at least a portion (e.g., an under display camera (UDC) area) of a screen area of a display (e.g., the display module 160 of FIG. 1 or the display 301 of FIG. 3) a peripheral area of the screen area, a notch area extending or protruding inwardly from the screen area, and/or a hole (e.g., a punch hole or a perforated hole) formed through a portion of the screen area. For example, the lens barrel 10 may be disposed inside the display (e.g., the display module 160 of FIG. 1 or the display 301 of FIG. 3) of the electronic device. For example, the lens barrel 10 may receive light through the camera exposure area formed on the display.

Referring to FIG. 6, at least one (e.g., the second lens L2) of the plurality of lenses L1, L2, L3, L4, L5, and L6 included in the lens assembly 400 may include a rib that extends from a starting point of a non-effective diameter to an inner surface of the lens barrel 10 and a portion of the object-side surface of another adjacent lens (e.g., the object-side surface S7 of the third lens L3). The non-effective diameter of the lens may mean a portion of the lens, which does not correspond to an effective diameter) (e.g., D1 in FIG. 6). For example, the effective diameter of the lens may refer to a distance from the center of the lens (e.g., the lenses L1, L2, L3, L4, L5, and L6) corresponding to a substantial area through which light passes through the lens, in a direction perpendicular to the optical axis O, and the non-effective diameter of the lens may refer to the remaining portion of the lens, which extends from an end of the effective diameter of the lens to the lens barrel (e.g., lens barrel 10).

According to an embodiment, the electronic device 101 may further include the film mask 11 inside the lens barrel 10. The film mask 11 may adjust the amount of light incident on the lens and thus function as an aperture stop (which serves as an entrance pupil to determine an F number Fno) or a field stop (which adjusts the magnitude of a peripheral light flux to adjust a peripheral light amount ratio and/or aberration). For example, the object-side surface S2 of the first lens L1 and a portion of the lens barrel 10 may face each other. The film mask 11 may be disposed between the object-side surface S2 of the first lens L1 and the portion of the lens barrel 10 that face each other. For example, the image-side surface S3 of the first lens L1 and the object-side surface S4 of the second lens L2 may face each other. The film mask 11 may be disposed between an edge of the image-side surface S3 of the first lens L1 and an edge of the object-side surface S4 of the second lens L2, which face each other.

According to an embodiment, the lens barrel 10 may be formed to surround at least a portion of the lens assembly 400 and the film mask 11. For example, the lens barrel 10 may function to stably mount the lens assembly 400 and the film mask 11 in an inner space, block external light, and prevent the electronic device 101 from falling and foreign substances from entering.

In the following detailed description, the shapes of the object-side surfaces, which are surfaces directed to the object obj, and/or image-side surfaces, which are surfaces directed to the image sensor I or the imaging surface img, of the lenses L1, L2, L3, L4, L5, and L6 may be described with the term 'concave' or 'convex'. Such references to the shapes of the lens surfaces may describe the shape of a point intersecting with the optical axis O or a paraxial region intersecting with the optical axis O. When it is said that an 'object-side surface is concave', this may describe a shape in which the center of the radius of curvature of the object-side surface is located closer to the object obj. When it is said that an 'object-side surface is convex', this may describe a shape in which the center of the radius of curvature of the object-side surface is located closer to the image sensor I. Therefore, even if one surface (an optical axis portion of the surface) of a lens is described as having a convex shape, an edge portion (a portion spaced a specific distance away from the optical axis portion of the surface) of the lens may be concave. Likewise, even if one surface (an optical axis portion of the surface) of a lens is described as having a concave shape, an edge portion (a portion spaced a specific distance away from the optical axis portion of the surface) of the lens may be convex. In the following detailed description and the claims, the term "inflection point" may refer to a point where the radius of curvature changes in a portion that does not intersect the optical axis.

Further, in the following detailed description, the radiuses of curvature, thicknesses, total track length (TTL), and focal lengths of the lenses L1, L2, L3, L4, L5, and L6 of the disclosure may all be represented in mm, unless otherwise specifically stated. In addition, the thicknesses of the lenses L1, L2, L3, L4, L5, and L6, a spacing between lenses, and the TTL (or overall length (OAL)) may be distances measured with respect to the optical axis O of the lenses.

According to an embodiment, in the lens assembly 400, the aperture sto may be disposed closer to the object obj than the lenses L1, L2, L3, L4, L5, and L6. This arrangement of the aperture sto may enable a slim lens assembly 400 having a wide angle of view to be implemented. According to an embodiment, in the lens assembly 400, the distance (e.g., T1 in FIG. 5) between the aperture sto and the object-side surface S4 of the second lens L2 may be about 0.6 mm to about 1.4 mm.

According to an embodiment, the first lens L1 may have a positive refractive power as a lens disposed closest to the object obj or the aperture sto, for example. In an embodiment, the first lens L1 may be a meniscus lens convex toward the object obj. As the first lens L1 has the meniscus shape convex toward the object obj, the overall length of the lens assembly 400 (e.g., the distance from the object-side surface S2 of the first lens L1 to the image plane img) may be reduced. In an embodiment, the center thickness of the first lens may be greater than the thicknesses of the other lenses L2, L3, L4, L5, and L6. For example, the center thickness may be measured with respect to the optical axis O.

According to an embodiment, the second lens L2 may be disposed second from the aperture sto and have a negative refractive power. In an embodiment, the object-side surface S4 and/or the image-side surface S5 of the second lens L2 may have a concave shape.

According to an embodiment, the third lens L3 may be disposed third from the aperture sto and have a positive refractive power. In an embodiment, the third lens L3 may be a meniscus lens convex toward the image. For example, the object-side surface L7 of the third lens L3 may be concave, and the image-side surface L8 of the third lens L3 may be convex.

According to an embodiment, the fourth lens L4 may be disposed fourth from the aperture sto, and may have a negative refractive power and according to an embodiment, a positive refractive power.

According to an embodiment, the fifth lens L5 may be disposed fifth from the aperture sto and have a negative refractive power. For example, the object-side surface S11 and/or the image-side surface S12 of the fifth lens L5 may include at least one inflection point. For example, the fifth lens L5 may be a meniscus lens convex toward the object obj. For example, the object-side surface S11 of the fifth lens L5 may be convex, and the image-side surface S12 of the fifth lens L5 may be concave.

According to an embodiment, the sixth lens L6 may be disposed closest to the image sensor I. For example, the sixth lens L6 may have a positive refractive power. For example, the sixth lens L6 may include at least one inflection point on each of the object-side surface S13 and/or the image-side surface S14. In an embodiment, the sixth lens L6 may be a meniscus lens convex toward the object obj. For example, the object-side surface S13 of the sixth lens L6 may be convex, and the image-side surface S14 of the sixth lens L6 may be concave. In an embodiment, the IR cut filter F may be disposed between the sixth lens L6 and the image sensor I. The above refractive power or lens shape of the fifth lens L5 and/or the sixth lens L6 may facilitate, for example, optical performance control of a peripheral region (e.g., astigmatism correction) and suppress an increase in the incident angle of peripheral light incident on the image plane img.

According to an embodiment, for some of the plurality of lenses L1, L2, L3, L4, L5, and L6, at least one lens surface (e.g., the object-side surface and/or the image-side surface) may be formed as an aspheric surface. Spherical aberration that may occur in the lenses may be suppressed by implementing lens surfaces of some of the plurality of lenses L1, L2, L3, L4, L5, and L6 as aspheric surfaces. According to an embodiment, the formation of the lens surface as an aspheric surface may prevent coma from occurring at the periphery of the image sensor I, facilitate astigmatism control, and reduce the occurrence of field curvature from the center to the periphery of the image plane img of the image sensor I.

According to an embodiment, the aperture sto may be disposed closer to the object obj than the lenses L1, L2, L3, L4, L5, and L6, and substantially define an area where light is incident on the lens assembly 400. For example, the lenses L1, L2, L3, L4, L5, and L6 may be substantially disposed between the aperture sto and the image sensor I, and may focus light incident through the aperture sto and make it incident on the image sensor I. In an embodiment, since the aperture sto is disposed closer to the object obj than the lenses L1, L2, L3, L4, L5, and L6, it is easy to secure wide-angle performance even if the effective diameters of the lenses L1, L2, L3, L4, L5, and L6 (e.g., the first lens L1 disposed first on the object obj or closest to the aperture) is reduced. For example, since the aperture sto is disposed closer to the object obj than the lenses L1, L2, L3, L4, L5, and L6, the lens assembly 400 may be miniaturized and have improved wide-angle performance. The lens assembly 400 may be miniaturized and/or have a small diameter while providing wide-angle performance suitable for a high-pixel sensor (e.g., the image sensor I) by the configuration of these lenses L1, L2, L3, L4, L5, and L6 and the arrangement of the aperture sto. For example, the lens assembly 400 may implement an angle of view of approximately 100 degrees, while providing optical performance suitable for a high-performance image sensor.

The lens assembly 400 according to an embodiment of the disclosure, for example, the first lens L1 and/or the second lens L2 may be formed with a small diameter. For example, as the diameter of the first lens is reduced, the outer diameter (e.g., D1 of FIG. 6) of a top portion of the lens barrel (e.g., the lens barrel 10 of FIG. 6), which is an outermost portion of the lens barrel on which the first lens L1 is disposed, may be reduced. Accordingly, the size of the camera exposure area (e.g., a punch hole or perforated hole area) formed in the electronic device (e.g., the electronic device 101 of FIG. 1 and/or the electronic device 101 of FIGS. 3 and 4) or an optical device (e.g., a camera module) may be reduced. For example, the reduction in the diameter of the first lens L1 and/or the second lens L2 may contribute to the expansion of the display, for example, when the lens assembly 400 is disposed on the front camera. In an embodiment, as the lens assembly 400 has a reduced diameter and/or an improved wide-angle performance, when disposed as a front camera, it may contribute to the miniaturization of the electronic device and/or suppress the encroachment of the screen area. In an embodiment, when implementing the front camera in the electronic device, the lens assembly 400 may provide an improved wide-angle performance, while providing an environment in which a high-performance image sensor may be utilized.

According to an embodiment, the lens assembly 400 may satisfy the condition presented by [Equation 1].

$$[\text{Equation 1}]$$

$$0.8 < \frac{TTL}{IH \times \tan HFOV} < 2$$

In [Equation 1], 'TTL' may be the distance (hereinafter, 'total lens length') from the object-side surface S2 of the first lens L1 to the image plane img, measured on the optical axis O. In [Equation 1], 'IH' may be a half of the diagonal length of the image sensor I, which may be a maximum height of the image plane img among heights or distances measured from the optical axis O to edges of the image plane img. In [Equation 1], 'HFOV' may be a half angle of view of the entire optical system including the lens assembly and the image sensor. When a value calculated by [Equation 1] is less than 0.8, a manufacturing sensitivity may increase. For example, the thicknesses of the lenses L1, L2, L3, L4, L5, and L6 may be too small, making manufacturing difficult. When the value calculated by [Equation 1] is greater than 2, it may be difficult to miniaturize (or slim down) the lens assembly 400, and for example, it may be difficult to reduce the overall length of the lens assembly 400. The overall height of the optical device (e.g., the camera module 305 or 312 of FIG. 3 or FIG. 4) in which the lens assembly 400 is mounted may increase, and a portion of the optical device may protrude, for example, outward from the electronic device (e.g., the electronic device 101 of FIG. 1, FIG. 3 and/or FIG. 4).

According to an embodiment, the lens assembly 400 may satisfy the condition presented by [Equation 2].

[Equation 2]

$$\frac{f6}{f} > 1.7$$

In [Equation 1], 'f6' may be the effective focal length of the sixth lens L6. In [Equation 1], 'f' may be the composite effective focal length of the entire optical system including the lens assembly 400 and the image sensor. For example, when a value calculated by [Equation 2] is less than 1.7, the lens assembly 400 may be slimmed down. However, the sensitivity of the sixth lens L6 may increase. Accordingly, it may be difficult to control the optical performance (e.g., correct aberration) of the lens assembly 400 and to adjust the manufacturing sensitivity.

According to an embodiment, the lens assembly 400 may satisfy the condition presented b [Equation 3].

[Equation 3]

$$1 < \frac{L1S1}{L6S2} < 4$$

In [Equation 3], 'L1S1' may be the radius of curvature of the object-side surface S2 of the first lens, and 'L6S2' may be the radius of curvature of the image-side surface S14 of the sixth lens. For example, when a value calculated by [Equation 3] is greater than 4, it may be difficult to control distortion aberration. For example, when the value calculated by [Equation 2] is less than 1, the lenses L1, L2, L3, L4, L5, and L6 may be difficult to manufacture due to an increased sensitivity.

Lens assemblies 400, 500, 600, 700, and 800 of [Embodiment 1] and/or [Embodiment 2] to [Embodiment 5] to be described later may satisfy the above-described conditions of [Equation 1] to [Equation 3], as described in [Table 1] below.

[Table 1]

|  | Embodiment 1 | Embodiment 2 | Embodiment 3 | Embodiment 4 | Embodiment 5 |
|---|---|---|---|---|---|
| Equation 1 | 1.7 | 1.7 | 1.5 | 1.7 | 1.5 |
| Equation 2 | 7.6 | 5.4 | 1.9 | 3.1 | 2.0 |
| Equation 3 | 1.8 | 1.7 | 2.2 | 1.9 | 2.2 |

As such, the lens assembly 400 may satisfy at least one of the above-described conditions, thereby being slim and having a wide angle of view. In an embodiment, the lens assembly 400 may satisfy at least some of the above-described shapes of the lenses L1, L2, L3, L4, L5, and L6 (e.g., the lens surfaces) and the above-described conditions presented by [Equations], and may be manufactured to exemplary specifications described in [Table 2] below. In [Table 2], lens surface 6 may refer to the gap between the second lens L2 and the third lens L3, and a measured thickness value of lens surface 6 may be the air gap between the two lenses.

[Table 2]

| Lens surface | Radius of curvature | Thickness | Effective diameter (H-Ape) | Effective focal length (EFL) | Refractive index (Nd) | Abbe number (Vd) |
|---|---|---|---|---|---|---|
| obj | infinity | infinity | | | | |
| sto | infinity | -0.020 | 0.720 | | | |
| 2 | 1.507 | 0.725 | 0.737 | 2.74 | 1.544 | 56.1 |
| 3 | -199.390 | 0.148 | 0.715 | | | |
| 4 | -15.548 | 0.180 | 0.680 | -6.94 | 1.671 | 19.2 |
| 5 | 6.793 | 0.090 | 0.693 | | | |
| 6 | infinity | 0.156 | 0.707 | | | |
| 7 | -6.218 | 0.221 | 0.732 | 27.37 | 1.544 | 56.1 |
| 8 | -4.447 | 0.052 | 0.875 | | | |
| 9 | -14.504 | 0.197 | 1.124 | -62.10 | 1.614 | 25.9 |
| 10 | -23.391 | 0.206 | 1.254 | | | |
| 11 | -59.008 | 0.418 | 1.362 | -14.95 | 1.614 | 25.9 |
| 12 | 11.028 | 0.094 | 1.641 | | | |
| 13 | 0.987 | 0.551 | 1.927 | 24.97 | 1.535 | 55.7 |
| 14 | 0.858 | 0.300 | 2.302 | | | |
| 15 | Infinity | 0.110 | 2.428 | infinity | 1.517 | 64.2 |
| 16 | Infinity | 0.572 | 2.466 | | | |
| img | Infinity | 0.016 | 2.805 | | | |

[Table 3], [Table 4], and [Table 5] below list aspheric coefficients of the lenses L1, L2, L3, L4, L5, and L6 and an aspheric surface may be defined by [Equation 4] below.

[Equation 4]

$$z=\frac{c'y^2}{1+\sqrt{1-(k+1)\,c'^2\,y^2}}+A\,y^4+B\,y^6+C\,y^8+D\,y^{10}+E\,y^{12}+F\,y^{14}+G\,y^{16}+H\,y^{18}+J\,y^{20}+K\,y^{22}+L\,y^{24}+M\,y^{26}+N\,y^{28}+O\,y^{30}$$

Herein, 'z' may represent the distance from the vertex of the lens L1, L2, L3, L4, L5, or L6 in the direction of the optical axis O, 'y' may represent the distance from the vertex of the lens L1, L2, L3, L4, L5, or L6 in a direction perpendicular to the optical axis O, 'c''' may represent the reciprocal of the radius of curvature at the vertex of the lens, 'K(Conic)' may represent a Conic constant, and 'A', 'B', 'C' , 'D', 'E', 'F', 'G', 'H', 'J', 'K', 'L', 'M', 'N', and 'O' may represent aspheric coefficients respectively.

[Table 3]

| Lens surface | 2 | 3 | 4 | 5 |
|---|---|---|---|---|
| K(Conic) | -7.5553E-01 | -1.0000E+00 | -1.5000E+01 | 3.8528E+01 |
| A(4th) | -4.5489E-02 | -1.9895E-01 | -1.2362E-01 | 4.0921E-02 |
| B(6th) | 7.7952E-01 | 1.2215E-01 | -1.2918E-01 | -6.1975E-01 |
| C(8th) | -7.7347E+00 | -1.1471E+00 | 2.2162E+00 | 4.5662E+00 |
| D(10th) | 4.1204E+01 | 4.8612E+00 | -6.5439E+00 | -1.2739E+01 |
| E(12th) | -1.2936E+02 | -1.0287E+01 | 1.0134E+01 | 1.7561E+01 |

(continued)

| Lens surface | 2 | 3 | 4 | 5 |
|---|---|---|---|---|
| F(14th) | 2.3598E+02 | 1.1765E+01 | -6.0079E+00 | -9.5720E+00 |
| G(16th) | -2.3193E+02 | -5.6623E+00 | 0.0000E+00 | 0.0000E+00 |
| H(18th) | 9.5050E+01 | 0.0000E+00 | 0.0000E+00 | 0.0000E+00 |
| J(20th) | 0.0000E+00 | 0.0000E+00 | 0.0000E+00 | 0.0000E+00 |
| K(22th) | 0.0000E+00 | 0.0000E+00 | 0.0000E+00 | 0.0000E+00 |
| L(24th) | 0.0000E+00 | 0.0000E+00 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 4]

| Lens surface | 7 | 8 | 9 | 10 |
|---|---|---|---|---|
| K(Conic) | 6.2434E+01 | 1.5470E+01 | -1.0821E+01 | -5.1938E+00 |
| A(4th) | 1.9313E-01 | 2.3997E-01 | -8.5698E-02 | 1.3201E-01 |
| B(6th) | -3.3531E+00 | -2.6775E+00 | 4.4734E-01 | -6.2398E-01 |
| C(8th) | 1.5907E+01 | 9.5107E+00 | -9.5728E-01 | 1.1543E+00 |
| D(10th) | -5.5305E+01 | -2.1309E+01 | 1.0828E+00 | -1.1698E+00 |
| E(12th) | 1.5736E+02 | 3.1992E+01 | -6.5748E-01 | 7.0201E-01 |
| F(14th) | -3.5062E+02 | -3.4813E+01 | 1.9661E-01 | -2.3267E-01 |
| G(16th) | 5.3197E+02 | 2.9234E+01 | -2.2346E-02 | 3.2279E-02 |
| H(18th) | -4.6644E+02 | -1.7374E+01 | 0.0000E+00 | 0.0000E+00 |
| J(20th) | 1.7518E+02 | 5.2544E+00 | 0.0000E+00 | 0.0000E+00 |
| K(22th) | 0.0000E+00 | 0.0000E+00 | 0.0000E+00 | 0.0000E+00 |
| L(24th) | 0.0000E+00 | 0.0000E+00 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 5]

| Lens surface | 11 | 12 | 13 | 14 |
|---|---|---|---|---|
| K(Conic) | -6.4819E+01 | 8.1422E+00 | -1.8239E+00 | -1.0107E+00 |
| A(4th) | 9.0439E-01 | 6.4901E-02 | -1.0119E+00 | -8.7151E-01 |
| B(6th) | -2.7123E+00 | 6.5221E-01 | 1.9427E+00 | 1.2437E+00 |
| C(8th) | 4.1401E+00 | -2.9380E+00 | -3.3938E+00 | -1.6312E+00 |
| D(10th) | 4.3725E-02 | 5.2915E+00 | 4.1223E+00 | 1.6549E+00 |
| E(12th) | -2.0844E+01 | -5.5968E+00 | -3.3859E+00 | -1.2380E+00 |
| F(14th) | 6.2342E+01 | 3.7841E+00 | 1.9445E+00 | 6.7710E-01 |
| G(16th) | -1.0369E+02 | -1.6551E+00 | -7.9902E-01 | -2.7022E-01 |
| H(18th) | 1.1179E+02 | 4.5294E-01 | 2.3649E-01 | 7.8260E-02 |
| J(20th) | -8.0867E+01 | -7.0375E-02 | -4.9986E-02 | -1.6225E-02 |

(continued)

| Lens surface | 11 | 12 | 13 | 14 |
|---|---|---|---|---|
| K(22th) | 3.8979E+01 | 4.7149E-03 | 7.3506E-03 | 2.3424E-03 |
| L(24th) | -1.2007E+01 | 4.4868E-06 | -7.1307E-04 | -2.2332E-04 |
| M(26th) | 2.1368E+00 | 0.0000E+00 | 4.0929E-05 | 1.2627E-05 |
| N(28th) | -1.6703E-01 | 0.0000E+00 | -1.0499E-06 | -3.2036E-07 |
| O(30th) | 0.0000E+00 | 0.0000E+00 | 0.0000E+00 | 0.0000E+00 |

[Embodiment 2]

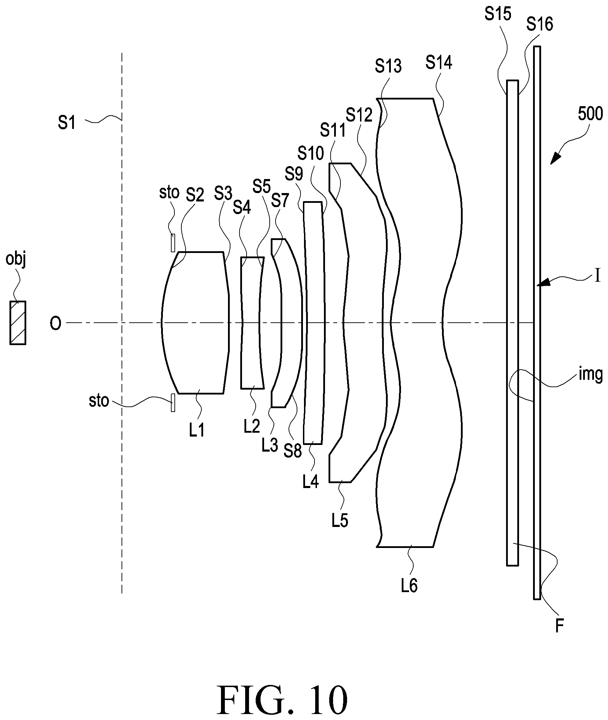

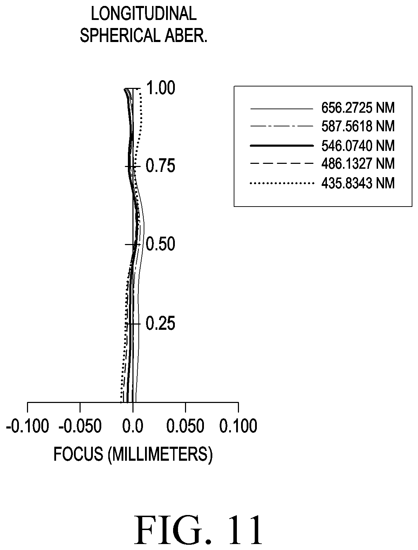

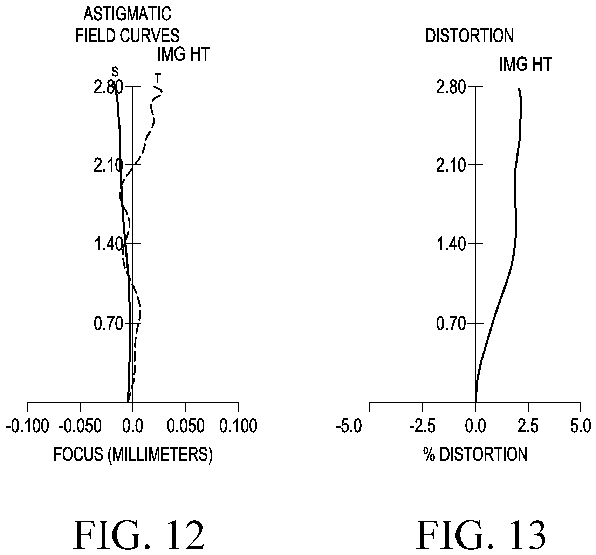

FIG. 10 is a configuration diagram an optical system including a lens assembly and an image sensor according to an embodiment of the disclosure. FIG. 11 is a graph illustrating spherical aberration of the lens assembly of FIG. 10 according to an embodiment of the disclosure. FIG. 12 is a graph illustrating astigmatic field curves of the lens assembly of FIG. 10 according to an embodiment of the disclosure. FIG. 13 is a graph illustrating distortion aberration of the lens assembly of FIG. 10 according to an embodiment of the disclosure.

FIG. 11 is a graph illustrating spherical aberration of the lens assembly 500 according to an embodiment of the disclosure, in which a horizontal axis represents coefficients of longitudinal spherical aberration, a vertical axis represents normalized distances from the optical axis O, and variations of the longitudinal spherical aberration according to light wavelengths are illustrated. The longitudinal spherical aberration is shown, for example, for each of light having a wavelength of 656.2725NM, light having a wavelength of 587.5618NM, light having a wavelength of 546.0740NM, light having a wavelength of 486.1327NM, and light having a wavelength of 435.8343NM. FIG. 12 is a graph illustrating the astigmatic field curves of the lens assembly 500 according to an embodiment of the disclosure, for light having the wavelength of 546.0740NM, in which 'S' denotes a sagittal plane and 'T' denotes a tangential plane. FIG. 13 is a graph illustrating distortion aberration of the lens assembly 500 according to an embodiment of the disclosure, for light having the wavelength of 546.0740NM.

In an embodiment, the lens assembly 500 may satisfy at least some of the above-described shapes of the lens(es) (e.g., the lens surface(s)) described with reference to FIGS. 5 and 6 and the above-described conditions presented by [Equations], be manufactured to exemplary specifications described in [Table 6] below, and have aspheric coefficients of [Table 7], [Table 8], and [Table 9].

[Table 6]

| Lens surface | Radius of curvature | Thickness | Effective diameter (H-Ape) | Effective focal length (EFL) | Refractive index (Nd) | Abbe number (Vd) |
|---|---|---|---|---|---|---|
| obj | infinity | infinity | | | | |
| sto | infinity | -0.100 | 0.717 | | | |
| 2 | 1.489 | 0.734 | 0.730 | 2.73 | 1.544 | 56.1 |
| 3 | 358.091 | 0.136 | 0.705 | | | |
| 4 | -23.426 | 0.190 | 0.678 | -7.05 | 1.671 | 19.2 |
| 5 | 6.034 | 0.091 | 0.691 | | | |
| 6 | infinity | 0.157 | 0.700 | | | |
| 7 | -6.041 | 0.221 | 0.733 | 38.35 | 1.544 | 56.1 |
| 8 | -4.750 | 0.073 | 0.881 | | | |
| 9 | -17.205 | 0.190 | 1.170 | -102.97 | 1.614 | 25.9 |
| 10 | -23.652 | 0.174 | 1.284 | | | |
| 11 | -34.834 | 0.417 | 1.347 | -12.92 | 1.614 | 25.9 |
| 12 | 10.452 | 0.081 | 1.604 | | | |
| 13 | 0.977 | 0.563 | 1.922 | 17.65 | 1.535 | 55.7 |

(continued)

| Lens surface | Radius of curvature | Thickness | Effective diameter (H-Ape) | Effective focal length (EFL) | Refractive index (Nd) | Abbe number (Vd) |
|---|---|---|---|---|---|---|
| 14 | 0.870 | 0.700 | 2.345 | | | |
| 15 | infinity | 0.110 | 2.656 | infinity | 1.517 | 64.2 |
| 16 | infinity | 0.164 | 2.695 | | | |
| img | infinity | 0.006 | 2.807 | | | |

[Table 7]

| Lens surface | 2 | 3 | 4 | 5 |
|---|---|---|---|---|
| K(Conic) | -7.0156E-01 | -1.0000E+00 | -1.0000E+00 | 3.6156E+01 |
| A(4th) | -2.4663E-02 | -2.0465E-01 | -1.2547E-01 | 4.5241E-02 |
| B(6th) | 4.5147E-01 | 2.5310E-01 | 2.1671E-02 | -5.2762E-01 |
| C(8th) | -4.8692E+00 | -2.3223E+00 | 9.6163E-01 | 3.9819E+00 |
| D(10th) | 2.6884E+01 | 9.8734E+00 | -2.8305E+00 | -1.1832E+01 |
| E(12th) | -8.6396E+01 | -2.1661E+01 | 5.1504E+00 | 1.7661E+01 |
| F(14th) | 1.5964E+02 | 2.5287E+01 | -3.4307E+00 | -1.0568E+01 |
| G(16th) | -1.5790E+02 | -1.2274E+01 | 0.0000E+00 | 0.0000E+00 |
| H(18th) | 6.4893E+01 | 0.0000E+00 | 0.0000E+00 | 0.0000E+00 |
| J(20th) | 0.0000E+00 | 0.0000E+00 | 0.0000E+00 | 0.0000E+00 |
| K(22th) | 0.0000E+00 | 0.0000E+00 | 0.0000E+00 | 0.0000E+00 |
| L(24th) | 0.0000E+00 | 0.0000E+00 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 8]

| Lens surface | 7 | 8 | 9 | 10 |
|---|---|---|---|---|
| K(Conic) | 6.2223E+01 | 1.9132E+01 | -7.0745E-01 | -1.0000E+01 |
| A(4th) | 1.9992E-01 | 3.2144E-01 | -2.5141E-02 | 4.0861E-02 |
| B(6th) | -3.5605E+00 | -2.8998E+00 | 1.8218E-01 | -1.3326E-01 |
| C(8th) | 1.8998E+01 | 7.3785E+00 | -5.0063E-01 | 1.2319E-01 |
| D(10th) | -7.1758E+01 | -4.6692E+00 | 6.9977E-01 | -2.4862E-02 |
| E(12th) | 1.9323E+02 | -2.6572E+01 | -5.2191E-01 | -1.4659E-02 |
| F(14th) | -3.4495E+02 | 8.7756E+01 | 1.9756E-01 | 5.0381E-03 |
| G(16th) | 3.5909E+02 | -1.2482E+02 | -2.9818E-02 | 9.3448E-05 |
| H(18th) | -1.6733E+02 | 8.9452E+01 | 0.0000E+00 | 0.0000E+00 |
| J(20th) | 6.5005E+00 | -2.6134E+01 | 0.0000E+00 | 0.0000E+00 |
| K(22th) | 0.0000E+00 | 0.0000E+00 | 0.0000E+00 | 0.0000E+00 |
| L(24th) | 0.0000E+00 | 0.0000E+00 | 0.0000E+00 | 0.0000E+00 |
| M(26th) | 0.0000E+00 | 0.0000E+00 | 0.0000E+00 | 0.0000E+00 |

(continued)

| Lens surface | 7 | 8 | 9 | 10 |
|---|---|---|---|---|
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 9]

| Lens surface | 11 | 12 | 13 | 14 |
|---|---|---|---|---|
| K(Conic) | 1.0000E+01 | 8.3569E+00 | -1.8574E+00 | -1.0105E+00 |
| A(4th) | 8.8342E-01 | 1.0770E-01 | -9.3195E-01 | -8.1126E-01 |
| B(6th) | -2.8551E+00 | 2.6562E-01 | 1.6323E+00 | 1.0741E+00 |
| C(8th) | 5.6575E+00 | -1.6414E+00 | -2.6289E+00 | -1.2947E+00 |
| D(10th) | -6.6446E+00 | 2.8918E+00 | 2.9657E+00 | 1.1977E+00 |
| E(12th) | -1.8182E+00 | -2.8176E+00 | -2.2765E+00 | -8.1181E-01 |
| F(14th) | 2.4923E+01 | 1.6578E+00 | 1.2368E+00 | 4.0077E-01 |
| G(16th) | -5.2061E+01 | -5.6158E-01 | -4.8936E-01 | -1.4408E-01 |
| H(18th) | 6.1795E+01 | 7.8400E-02 | 1.4254E-01 | 3.7580E-02 |
| J(20th) | -4.7197E+01 | 1.1588E-02 | -3.0385E-02 | -7.0248E-03 |
| K(22th) | 2.3592E+01 | -5.6495E-03 | 4.6253E-03 | 9.1646E-04 |
| L(24th) | -7.4669E+00 | 5.7963E-04 | -4.7729E-04 | -7.9216E-05 |
| M(26th) | 1.3580E+00 | 0.0000E+00 | 2.9966E-05 | 4.0770E-06 |
| N(28th) | -1.0811E-01 | 0.0000E+00 | -8.6506E-07 | 0.0000E+00 |
| O(30th) | 0.0000E+00 | 0.0000E+00 | 0.0000E+00 | 0.0000E+00 |

[Embodiment 3]

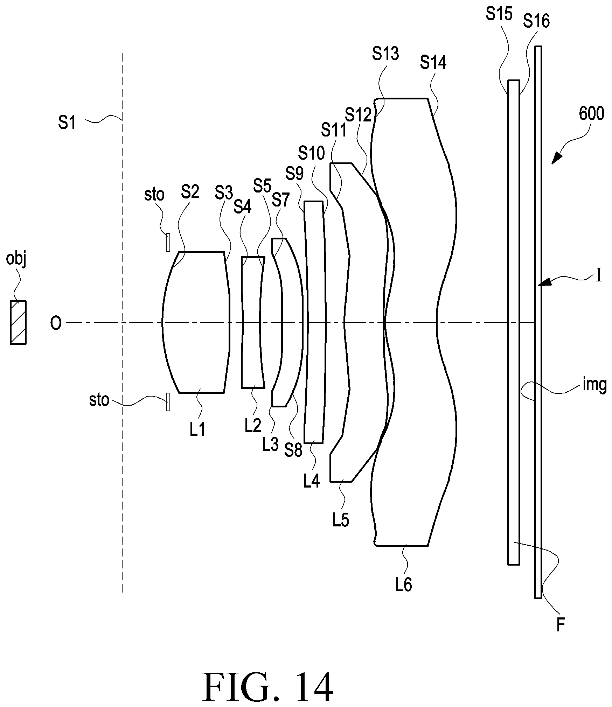

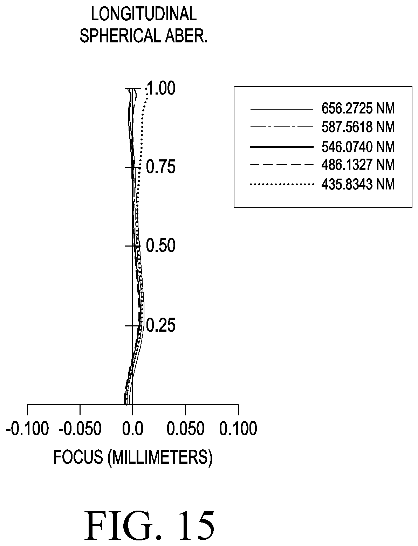

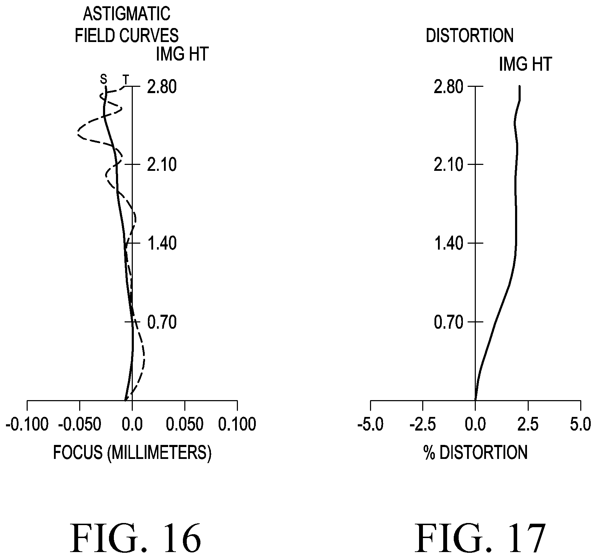

FIG. 14 is a configuration diagram an optical system including a lens assembly and an image sensor according to an embodiment of the disclosure. FIG. 15 is a graph illustrating spherical aberration of the lens assembly of FIG. 14 according to an embodiment of the disclosure. FIG. 16 is a graph illustrating astigmatic field curves of the lens assembly of FIG. 14 according to an embodiment of the disclosure. FIG. 17 is a graph illustrating distortion aberration of the lens assembly of FIG. 14 according to an embodiment of the disclosure.

In an embodiment, the lens assembly 600 may satisfy at least some of the above-described shapes of the lens(es) (e.g., the lens surface(s)) described with reference to FIGS. 5 and 6 and the above-described conditions presented by [Equations], be manufactured to exemplary specifications described in [Table 10] below, and have aspheric coefficients of [Table 11], [Table 12], and [Table 13].

[Table 10]

| Lens surface | Radius of curvature | Thickness | Effective diameter (H-Ape) | Effective focal length (EFL) | Refractive index (Nd) | Abbe number (Vd) |
|---|---|---|---|---|---|---|
| Obj | infinity | infinity | | | | |
| sto | infinity | 0.000 | 0.649 | | | |
| 2 | 1.750 | 0.691 | 0.649 | 2.70 | 1.544 | 56.1 |
| 3 | -8.081 | 0.129 | 0.682 | | | |
| 4 | -4.277 | 0.200 | 0.666 | -6.64 | 1.661 | 20.4 |
| 5 | -121.768 | 0.060 | 0.680 | | | |
| 6 | infinity | 0.155 | 0.718 | | | |

(continued)

| Lens surface | Radius of curvature | Thickness | Effective diameter (H-Ape) | Effective focal length (EFL) | Refractive index (Nd) | Abbe number (Vd) |
|---|---|---|---|---|---|---|
| 7 | -50.924 | 0.298 | 0.772 | 22.00 | 1.544 | 56.1 |
| 8 | -9.745 | 0.092 | 0.922 | | | |
| 9 | -11.412 | 0.200 | 1.098 | -170.79 | 1.614 | 25.9 |
| 10 | -12.876 | 0.129 | 1.223 | | | |
| 11 | 340.090 | 0.331 | 1.308 | -7.17 | 1.635 | 23.9 |
| 12 | 4.531 | 0.097 | 1.614 | | | |
| 13 | 0.801 | 0.588 | 1.824 | 5.72 | 1.535 | 55.7 |
| 14 | 0.805 | 0.700 | 2.162 | | | |
| 15 | infinity | 0.110 | 2.674 | infinity | 1.517 | 64.2 |
| 16 | infinity | 0.142 | 2.712 | | | |
| img | infinity | 0.008 | 2.800 | | | |

[Table 11]

| Lens surface | 2 | 3 | 4 | 5 |
|---|---|---|---|---|
| K(Conic) | -1.5159E+00 | 0.0000E+00 | 3.4845E+01 | 9.8000E+01 |
| A(4th) | -3.5697E-02 | -1.9371E-01 | -5.4326E-02 | 5.8764E-02 |
| B(6th) | 7.7102E-01 | -1.4906E-01 | 2.3419E-01 | -5.1050E-01 |
| C(8th) | -1.1709E+01 | 5.0806E-01 | -2.7481E+00 | 4.9390E+00 |
| D(10th) | 1.0320E+02 | -5.0117E+00 | 1.7048E+01 | -2.9037E+01 |
| E(12th) | -5.9913E+02 | 2.5099E+01 | -6.7106E+01 | 9.7503E+01 |
| F(14th) | 2.3337E+03 | -6.6523E+01 | 1.7315E+02 | -1.9324E+02 |
| G(16th) | -6.0738E+03 | 9.9797E+01 | -2.4720E+02 | 2.1001E+02 |
| H(18th) | 1.0151E+04 | -7.6470E+01 | 1.5018E+02 | -9.6982E+01 |
| J(20th) | -9.8561E+03 | 1.8771E+01 | 0.0000E+00 | 0.0000E+00 |
| K(22th) | 4.2219E+03 | 0.0000E+00 | 0.0000E+00 | 0.0000E+00 |
| L(24th) | 0.0000E+00 | 0.0000E+00 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 12]

| Lens surface | 7 | 8 | 9 | 10 |
|---|---|---|---|---|
| K(Conic) | 6.1187E+01 | 9.5285E+01 | 0.0000E+00 | 0.0000E+00 |
| A(4th) | -8.9112E-02 | 1.9887E-01 | -1.7912E-02 | -2.7665E-02 |
| B(6th) | 6.8545E-01 | -2.1177E+00 | -6.2688E-02 | 1.7780E-01 |
| C(8th) | -2.1329E+01 | 5.1709E+00 | 5.0684E-01 | -3.6289E-01 |
| D(10th) | 2.2078E+02 | 1.8230E+00 | -1.2344E+00 | 3.2817E-01 |
| E(12th) | -1.3382E+03 | -6.3797E+01 | 1.3846E+00 | -1.3361E-01 |

(continued)

| Lens surface | 7 | 8 | 9 | 10 |
|---|---|---|---|---|
| F(14th) | 5.2790E+03 | 2.5712E+02 | -7.3658E-01 | 1.9870E-02 |
| G(16th) | -1.3944E+04 | -5.7807E+02 | 1.5031E-01 | 0.0000E+00 |
| H(18th) | 2.4451E+04 | 8.0760E+02 | 0.0000E+00 | 0.0000E+00 |
| J(20th) | -2.7298E+04 | -6.9428E+02 | 0.0000E+00 | 0.0000E+00 |
| K(22th) | 1.7562E+04 | 3.3727E+02 | 0.0000E+00 | 0.0000E+00 |
| L(24th) | -4.9554E+03 | -7.1000E+01 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 13]

| Lens Surface | 11 | 12 | 13 | 14 |
|---|---|---|---|---|
| K(Conic) | 5.0053E+01 | 6.0831E+00 | -2.3157E+00 | -1.1003E+00 |
| A(4th) | 1.0740E+00 | 1.4916E-01 | -8.7727E-01 | -7.2642E-01 |
| B(6th) | -4.2844E+00 | -5.2211E-01 | 1.7619E+00 | 7.3421E-01 |
| C(8th) | 1.6073E+01 | 4.5436E+00 | -3.6933E+00 | -5.4045E-01 |
| D(10th) | -5.1462E+01 | -1.9495E+01 | 6.9708E+00 | 1.9138E-01 |
| E(12th) | 1.2343E+02 | 4.6572E+01 | -1.0651E+01 | 3.9522E-02 |
| F(14th) | -2.1673E+02 | -7.2433E+01 | 1.1784E+01 | -6.7546E-02 |
| G(16th) | 2.7814E+02 | 7.8510E+01 | -9.0936E+00 | 1.9004E-02 |
| H(18th) | -2.5972E+02 | -6.1017E+01 | 4.9045E+00 | 7.2691E-03 |
| J(20th) | 1.7407E+02 | 3.4245E+01 | -1.8607E+00 | -7.5047E-03 |
| K(22th) | -8.1413E+01 | -1.3758E+01 | 4.9507E-01 | 2.7853E-03 |
| L(24th) | 2.5181E+01 | 3.8551E+00 | -9.0566E-02 | -5.8698E-04 |
| M(26th) | -4.6204E+00 | -7.1473E-01 | 1.0863E-02 | 7.3916E-05 |
| N(28th) | 3.8003E-01 | 7.8714E-02 | -7.7017E-04 | -5.2041E-06 |
| O(30th) | 0.0000E+00 | -3.8956E-03 | 2.4484E-05 | 1.5825E-07 |

[Embodiment 4]

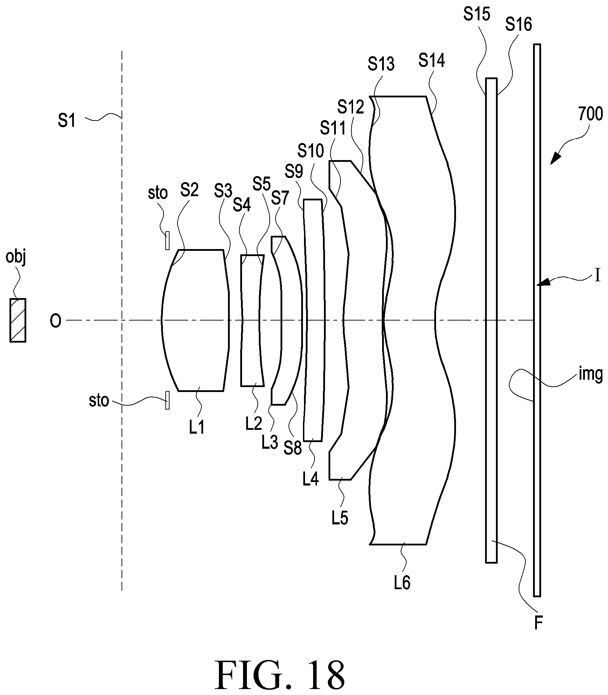

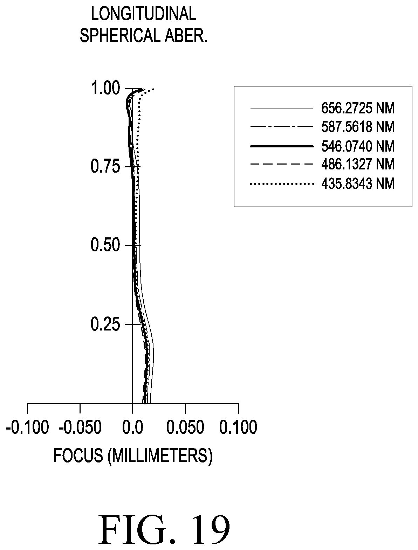

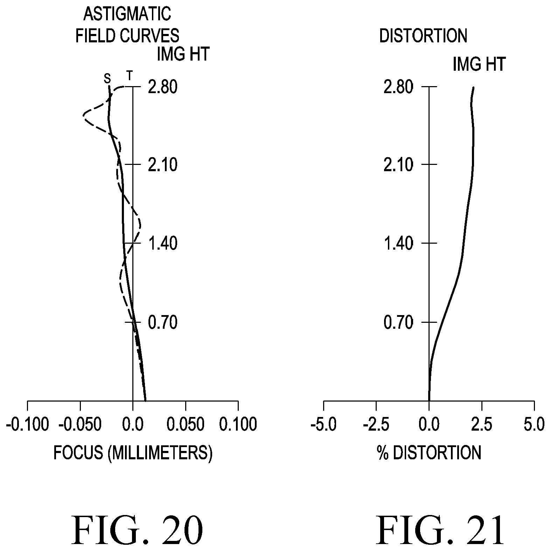

FIG. 18 is a configuration diagram an optical system including a lens assembly and an image sensor according to an embodiment of the disclosure. FIG. 19 is a graph illustrating spherical aberration of the lens assembly of FIG. 18 according to an embodiment of the disclosure. FIG. 20 is a graph illustrating astigmatic field curves of the lens assembly of FIG. 18 according to an embodiment of the disclosure. FIG. 21 is a graph illustrating distortion aberration of the lens assembly of FIG. 18 according to an embodiment of the disclosure.

In an embodiment, the lens assembly 700 may satisfy at least some of the above-described shapes of the lens(es) (e.g., the lens surface(s)) described with reference to FIGS. 5 and 6 and the above-described conditions presented by [Equations], be manufactured to exemplary specifications described in [Table 14] below, and have aspheric coefficients of [Table 15], [Table 16], and [Table 17].

[Table 14]

| Lens surface | Radius of curvature | Thickness | Effective diameter (H-Ape) | Effective focal length (EFL) | Refractive index (Nd) | Abbe number (Vd) |
|---|---|---|---|---|---|---|
| Obj | infinity | Infinity | | | | |
| sto | infinity | 0.000 | 0.721 | | | |
| 2 | 1.542 | 0.750 | 0.727 | 2.67 | 1.544 | 56.1 |
| 3 | -22.809 | 0.120 | 0.727 | | | |
| 4 | -7.055 | 0.195 | 0.705 | -6.90 | 1.661 | 20.4 |
| 5 | 13.437 | 0.107 | 0.685 | | | |
| 6 | infinity | 0.142 | 0.722 | | | |
| 7 | -57.923 | 0.270 | 0.769 | 20.84 | 1.544 | 56.1 |
| 8 | -9.535 | 0.086 | 0.937 | | | |
| 9 | -6.483 | 0.233 | 1.122 | -23.51 | 1.635 | 23.9 |
| 10 | -11.535 | 0.138 | 1.289 | | | |
| 11 | 20.853 | 0.335 | 1.404 | -9.13 | 1.635 | 23.9 |
| 12 | 4.543 | 0.140 | 1.638 | | | |
| 13 | 0.877 | 0.531 | 1.823 | 10.21 | 1.535 | 55.7 |
| 14 | 0.822 | 0.500 | 2.107 | | | |
| 15 | infinity | 0.110 | 2.536 | infinity | 1.517 | 64.2 |
| 16 | infinity | 0.363 | 2.578 | | | |
| Img | infinity | -0.012 | 2.800 | | | |

[Table 15]

| Lens surface | 2 | 3 | 4 | 5 |
|---|---|---|---|---|
| K(Conic) | -8.6671E-01 | 0.0000E+00 | 3.4930E+01 | 7.0421E+01 |
| A(4th) | -3.4245E-02 | -1.9225E-01 | -4.6663E-02 | 8.7409E-02 |
| B(6th) | 9.1974E-01 | 9.0060E-02 | -2.1425E-01 | -7.1259E-01 |
| C(8th) | -1.3343E+01 | -8.8290E-01 | 1.8780E+00 | 6.9407E+00 |
| D(10th) | 1.1018E+02 | 3.2179E+00 | -3.3671E+00 | -3.5622E+01 |
| E(12th) | -5.7093E+02 | -5.3680E+00 | -1.3790E+01 | 1.1409E+02 |
| F(14th) | 1.8989E+03 | -4.2047E+00 | 7.8346E+01 | -2.2671E+02 |
| G(16th) | -4.0464E+03 | 4.4546E+01 | -1.3425E+02 | 2.5635E+02 |
| H(18th) | 5.3296E+03 | -8.4076E+01 | 7.9375E+01 | -1.2517E+02 |
| J(20th) | -3.9413E+03 | 5.2114E+01 | 0.0000E+00 | 0.0000E+00 |
| K(22th) | 1.2479E+03 | 0.0000E+00 | 0.0000E+00 | 0.0000E+00 |
| L(24th) | 0.0000E+00 | 0.0000E+00 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 16]

| Lens surface | 7 | 8 | 9 | 10 |
|---|---|---|---|---|
| K(Conic) | 6.1187E+01 | 3.6245E+01 | -2.5996E+01 | 0.0000E+00 |
| A(4th) | 8.4046E-02 | 3.2065E-01 | -1.9375E-02 | -9.3190E-03 |
| B(6th) | -1.3324E+00 | -1.2622E+00 | 2.3103E-01 | 9.1893E-03 |
| C(8th) | -2.5491E+00 | -5.8585E+00 | -6.7908E-01 | 4.6812E-02 |
| D(10th) | 7.2293E+01 | 6.0202E+01 | 1.0770E+00 | -1.7686E-01 |
| E(12th) | -5.3274E+02 | -2.5108E+02 | -9.5910E-01 | 2.7654E-01 |
| F(14th) | 2.4040E+03 | 6.5087E+02 | 4.4187E-01 | -2.2336E-01 |
| G(16th) | -7.1941E+03 | -1.1295E+03 | -8.1865E-02 | 9.2130E-02 |
| H(18th) | 1.4169E+04 | 1.3158E+03 | 0.0000E+00 | -1.5530E-02 |
| J(20th) | -1.7575E+04 | -9.8867E+02 | 0.0000E+00 | 0.0000E+00 |
| K(22th) | 1.2420E+04 | 4.3336E+02 | 0.0000E+00 | 0.0000E+00 |
| L(24th) | -3.8077E+03 | -8.4208E+01 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 17]

| Lens Surface | 11 | 12 | 13 | 14 |
|---|---|---|---|---|
| K(Conic) | -3.0242E+00 | 5.8919E+00 | -2.4776E+00 | -1.1219E+00 |
| A(4th) | 8.4655E-01 | -1.1531E-01 | -1.0380E+00 | -9.1296E-01 |
| B(6th) | -2.3459E+00 | 2.0035E+00 | 2.5359E+00 | 1.4108E+00 |
| C(8th) | 4.9617E+00 | -7.5960E+00 | -5.4283E+00 | -1.9722E+00 |
| D(10th) | -1.0725E+01 | 1.5420E+01 | 8.7603E+00 | 2.1616E+00 |
| E(12th) | 2.0566E+01 | -2.0639E+01 | -1.0713E+01 | -1.8022E+00 |
| F(14th) | -3.0145E+01 | 1.9385E+01 | 9.6952E+00 | 1.1252E+00 |
| G(16th) | 3.1358E+01 | -1.3128E+01 | -6.3106E+00 | -5.1783E-01 |
| H(18th) | -2.2197E+01 | 6.5471E+00 | 2.9065E+00 | 1.7290E-01 |
| J(20th) | 1.0163E+01 | -2.4783E+00 | -9.3451E-01 | -4.1078E-02 |
| K(22th) | -2.7114E+00 | 7.4635E-01 | 2.0492E-01 | 6.7353E-03 |
| L(24th) | 2.9520E-01 | -1.8557E-01 | -2.9214E-02 | -7.2202E-04 |
| M(26th) | 2.5718E-02 | 3.6492E-02 | 2.4423E-03 | 4.5426E-05 |
| N(28th) | -7.0314E-03 | -4.8090E-03 | -9.0938E-05 | -1.2693E-06 |
| O(30th) | 0.0000E+00 | 2.9985E-04 | 0.0000E+00 | 0.0000E+00 |

[Embodiment 5]

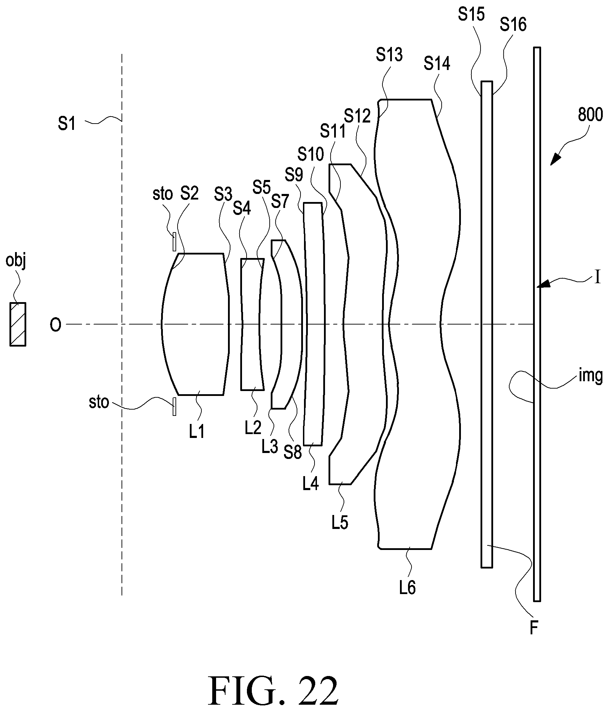

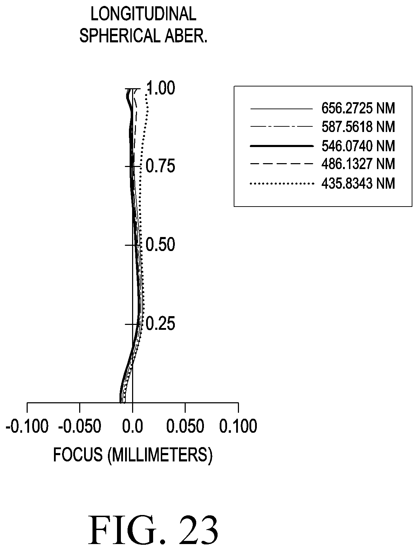

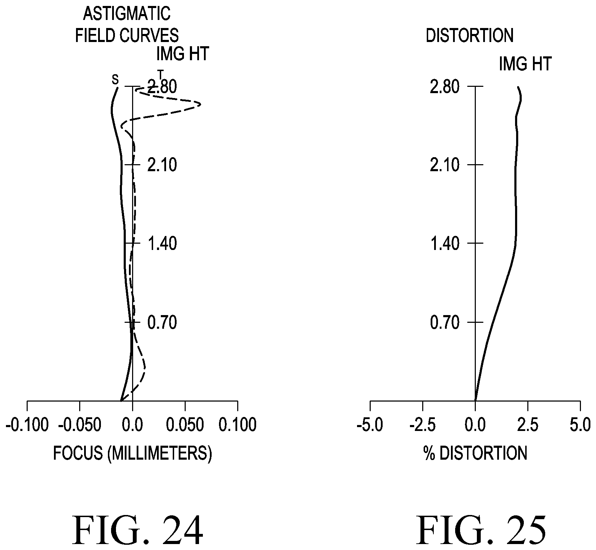

FIG. 22 is a configuration diagram an optical system including a lens assembly and an image sensor according to an embodiment of the disclosure. FIG. 23 is a graph illustrating spherical aberration of the lens assembly of FIG. 22 according to an embodiment of the disclosure. FIG. 24 is a graph illustrating astigmatic field curves of the lens assembly of FIG. 22 according to an embodiment of the disclosure. FIG. 25 is a graph illustrating distortion aberration of the lens assembly of FIG. 22 according to an embodiment of the disclosure.

In an embodiment, the lens assembly 800 may satisfy at least some of the above-described shapes of the lens(es) (e.g., the lens surface(s)) described with reference to FIGS. 5 and 6 and the above-described conditions presented by [Equations], be manufactured to exemplary specifications described in [Table 18] below, and have aspheric coefficients of [Table 19], [Table 20], and [Table 21].

[Table 18]

| Lens surface | Radius of curvature | Thickness | Effective diameter (H-Ape) | Effective focal length (EFL) | Refractive index (Nd) | Abbe number (Vd) |
|---|---|---|---|---|---|---|
| Obj | infinity | infinity | | | | |
| sto | infinity | -0.110 | 0.649 | | | |
| 2 | 1.740 | 0.700 | 0.656 | 2.69 | 1.544 | 56.1 |
| 3 | -8.192 | 0.120 | 0.687 | | | |
| 4 | -4.398 | 0.200 | 0.673 | -6.29 | 1.661 | 20.4 |
| 5 | 98.000 | 0.073 | 0.690 | | | |
| 6 | infinity | 0.156 | 0.732 | | | |
| 7 | -69.323 | 0.291 | 0.781 | 19.69 | 1.544 | 56.1 |
| 8 | -9.329 | 0.081 | 0.925 | | | |
| 9 | -17.530 | 0.202 | 1.113 | 256.42 | 1.614 | 25.9 |
| 10 | -15.858 | 0.138 | 1.242 | | | |
| 11 | -87.322 | 0.305 | 1.317 | -6.67 | 1.635 | 23.9 |
| 12 | 4.506 | 0.120 | 1.595 | | | |
| 13 | 0.808 | 0.598 | 1.835 | 5.80 | 1.535 | 55.7 |
| 14 | 0.809 | 0.500 | 2.172 | | | |
| 15 | infinity | 0.110 | 2.564 | infinity | 1.517 | 64.2 |
| 16 | infinity | 0.338 | 2.602 | | | |
| img | infinity | 0.012 | 2.800 | | | |

[Table 19]

| Lens surface | 2 | 3 | 4 | 5 |
|---|---|---|---|---|
| K(Conic) | -1.3953E+00 | 0.0000E+00 | 3.5342E+01 | -9.3000E+01 |
| A(4th) | -4.2871E-02 | -1.7374E-01 | -3.2208E-02 | 5.4084E-02 |
| B(6th) | 8.9026E-01 | -5.5043E-01 | -3.0927E-01 | -5.3548E-01 |
| C(8th) | -1.1702E+01 | 6.1922E+00 | 2.7911E+00 | 4.8724E+00 |
| D(10th) | 8.3081E+01 | -5.2569E+01 | -1.6948E+01 | -2.6966E+01 |
| E(12th) | -3.3354E+02 | 2.6989E+02 | 6.1314E+01 | 8.5997E+01 |
| F(14th) | 6.2316E+02 | -8.4374E+02 | -1.1859E+02 | -1.6269E+02 |
| G(16th) | 2.6121E+02 | 1.5845E+03 | 1.1771E+02 | 1.6879E+02 |
| H(18th) | -3.5587E+03 | -1.6417E+03 | -4.3098E+01 | -7.3713E+01 |
| J(20th) | 6.2720E+03 | 7.1992E+02 | 0.0000E+00 | 0.0000E+00 |
| K(22th) | -3.7490E+03 | 0.0000E+00 | 0.0000E+00 | 0.0000E+00 |
| L(24th) | 0.0000E+00 | 0.0000E+00 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |

(continued)

| Lens surface | 2 | 3 | 4 | 5 |
|---|---|---|---|---|
| O(30th) | 0.0000E+00 | 0.0000E+00 | 0.0000E+00 | 0.0000E+00 |

[Table 20]

| Lens surface | 7 | 8 | 9 | 10 |
|---|---|---|---|---|
| K(Conic) | 6.1187E+01 | 9.4354E+01 | 0.0000E+00 | 0.0000E+00 |
| A(4th) | -5.7164E-02 | 2.8412E-01 | -4.7612E-02 | -5.2867E-02 |
| B(6th) | 8.1446E-02 | -3.8064E+00 | -2.9005E-01 | 4.9912E-01 |
| C(8th) | -1.5441E+01 | 2.0099E+01 | 2.4175E+00 | -1.7767E+00 |
| D(10th) | 1.7749E+02 | -8.2258E+01 | -7.0141E+00 | 3.8139E+00 |
| E(12th) | -1.0914E+03 | 2.6705E+02 | 1.0992E+01 | -5.4276E+00 |
| F(14th) | 4.2518E+03 | -6.5155E+02 | -1.0400E+01 | 4.9841E+00 |
| G(16th) | -1.0979E+04 | 1.1333E+03 | 6.0438E+00 | -2.7740E+00 |
| H(18th) | 1.8740E+04 | -1.3446E+03 | -2.0114E+00 | 8.4332E-01 |
| J(20th) | -2.0336E+04 | 1.0274E+03 | 2.9482E-01 | -1.0720E-01 |
| K(22th) | 1.2702E+04 | -4.5371E+02 | 0.0000E+00 | 0.0000E+00 |
| L(24th) | -3.4722E+03 | 8.7905E+01 | 0.0000E+00 | 0.0000E+00 |
| M(26th) | 0.0000E+00 | 0.0000E+00 | 0.0000E+00 | 0.0000E+00 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 21]

| Lens surface | 11 | 12 | 13 | 14 |
|---|---|---|---|---|
| K(Conic) | -9.5000E+01 | 6.1284E+00 | -2.3055E+00 | -1.0990E+00 |
| A(4th) | 1.0990E+00 | 1.9399E-01 | -8.6476E-01 | -7.5523E-01 |
| B(6th) | -3.9740E+00 | -9.3049E-01 | 1.5472E+00 | 8.6278E-01 |
| C(8th) | 1.2651E+01 | 6.7118E+00 | -2.6324E+00 | -8.2647E-01 |
| D(10th) | -3.2446E+01 | -2.6362E+01 | 4.3134E+00 | 6.2251E-01 |
| E(12th) | 5.6876E+01 | 6.0237E+01 | -6.5745E+00 | -4.1890E-01 |
| F(14th) | -6.1845E+01 | -9.0421E+01 | 7.6124E+00 | 2.7889E-01 |
| G(16th) | 3.1433E+01 | 9.4643E+01 | -6.1173E+00 | -1.6813E-01 |
| H(18th) | 1.2987E+01 | -7.0946E+01 | 3.3905E+00 | 7.9665E-02 |
| J(20th) | -3.4888E+01 | 3.8356E+01 | -1.3076E+00 | -2.7466E-02 |
| K(22th) | 2.7415E+01 | -1.4828E+01 | 3.5092E-01 | 6.6482E-03 |
| L(24th) | -1.1547E+01 | 3.9937E+00 | -6.4402E-02 | -1.0955E-03 |
| M(26th) | 2.6179E+00 | -7.1101E-01 | 7.7199E-03 | 1.1686E-04 |
| N(28th) | -2.5180E-01 | 7.5109E-02 | -5.4543E-04 | -7.2706E-06 |
| O(30th) | 0.0000E+00 | -3.5605E-03 | 1.7244E-05 | 2.0033E-07 |

According to an embodiment, the lens assemblies 400, 500, 600, 700, and 800 may provide excellent wide-angle performance with an angle of view of about 100 degrees in combination with a high-pixel image sensor by satisfying the conditions described above. According to an embodiment, the camera exposure area may be relatively reduced for the same angle of view by reducing the diameter of some lens (e.g., the first lens L1) and slimming down the entire lens assemblies 400, 500, 600, 700, and 800. In an embodiment, the aperture sto may be disposed closer to the object obj than the lenses L1, L2, L3, L4, L5, and L6, thereby making it easy to reduce the effective diameter of the first lens L1 or the second lens L2. For example, as the aperture sto is disposed closer to the object obj than the lenses L1, L2, L3, L4, L5, and L6, the lens assemblies 400, 500, 600, 700, and 800 may be smaller in diameter while providing good wide-angle performance. In an embodiment, a wall thickness of the lens barrel (e.g., the lens barrel 10 of FIG. 6) supporting the lens may be secured by designing the distance between the object-side surface S4 of the second lens L2, which is the second lens disposed from the aperture sto, and the aperture sto to a specified range (e.g., about 0.6mm to about 1.4mm). An electronic device according to an embodiment of the disclosure may include the lens assembly 400, 500, 600, 700, or 800, the image sensor 20 or I including the imaging surface img, and/or the optical member sto. The lens assembly includes at least six lenses L1, L2, L3, L4, L5, and L6 sequentially arranged along the optical axis O in a direction from the object obj toward an image, and including the first lens L1, the second lens L2, the third lens L3, the fourth lens L4, the fifth lens L5, and/or the sixth lens L6. The first lens may have a positive refractive power. The sixth lens may have a positive refractive power. The image-side surface S14 of the sixth lens may be formed to be concave. The optical member may be disposed between the object and the imaging surface. A central thickness of the first lens may be greater than central thicknesses of the other lenses L2, L3, L4, L5, and L6 measured with respect to the optical axis. The distance T1 between the optical member and the object-side surface S4 of the second lens may be about 0.6mm to about 1.4mm. The lens assembly may satisfy [Conditional Expression 1] below.

[Conditional Expression 1]

$$0.8 < TTL/(IH*\tan(HFOV)) < 2$$

(where in [Conditional Expression 1], 'TTL' is a distance from the object-side surface of the first lens to the imaging surface, 'IH' is a half of a diagonal length of the image sensor, and 'HFOV' is a half angle of view of an entire optical system including the lens assembly and the image sensor.)

In an embodiment, the lens assembly may satisfy [Conditional Expression 2] below.

[Conditional Expression 2] $f6/f > 1.7$

(where f6 is an effective focal length of the sixth lens, and f is a composite effective focal length of the entire optical system including the lens assembly and the image sensor.)

In an embodiment, the lens assembly may satisfy [Conditional Expression 3] below.

[Conditional Expression 3] $1 < L1S1/L6S2 < 4$

(where L1S1 is a radius of curvature of the object-side surface of the first lens, and L6S2 is a radius of curvature of the image-side surface of the sixth lens.)

In an embodiment, the object-side surface S2 of the first lens may be formed to be convex.

In an embodiment, the object-side surface S13 of the sixth lens may be formed to be convex.

In an embodiment, the optical member may include an aperture and be disposed between the object and the first lens.

In an embodiment, the second lens may have a negative refractive power.

In an embodiment, the fifth lens may have a negative refractive power.

In an embodiment, the third lens may have a positive refractive power and a meniscus shape convex toward the image.

In an embodiment, the image-side surface S3 of the first lens may be formed to be convex.

In an embodiment, each of the object-side surface and image-side surface of at least one of the fifth lens or the sixth lens may be formed as an aspheric surface.

A lens assembly according to an embodiment of the disclosure may include at least six lenses L1, L2, L3, L4, L5, and L6 sequentially arranged along the optical axis O in a direction from the object obj toward an image, the image sensor 230 or I including the imaging surface (img), and/or the aperture sto. The at least six lenses may include the first lens L1, the second lens L2, the third lens L3, the fourth lens L4, the fifth lens L5, and/or the sixth lens L6. The first lens may have a positive refractive power. The object-side surface S2 of the first lens may be formed to be convex. The sixth lens L6 may have a positive refractive power. The image-side surface S14 of the sixth lens may be formed to be concave. The aperture may be disposed between the object and the first lens. A central thickness of the first lens may be greater than central thicknesses of the other lenses L2, L3, L4, L5, and L6 measured with respect to the optical axis. The distance between the aperture and the object-side surface of the second lens may be about 0.6mm to about 1.4mm. The lens assembly may satisfy [Conditional Expression 1] below.

[Conditional Expression 1]

$$0.8 < TTL/(IH*\tan(HFOV)) < 2$$

(where in [Conditional Expression 1], 'TTL' is a distance from the object-side surface of the first lens to the imaging surface, 'IH' is a half of a diagonal length of the image sensor, and 'HFOV' is a half angle of view of an entire optical system including the lens assembly and the image sensor.)

In an embodiment, the object-side surface S2 of the first lens may be formed to be convex.

In an embodiment, the object-side surface S13 of the sixth lens may be formed to be convex.

In an embodiment, the optical member may include an aperture and be disposed between the object and the first lens.

In an embodiment, the second lens may have a negative refractive power.

In an embodiment, the fifth lens may have a negative refractive power.

In an embodiment, the third lens may have a positive refractive power and a meniscus shape convex toward the image.

Electronic devices including displays are gradually expanding their areas to meet the demand for large screens. In response to the expansion of the display area, the arrangement structure of various components disposed on a front plate, for example, at least one camera module may also be changed accordingly. In order to promote the expansion of the display area by the arrangement structure of the camera module and to smoothly arrange electronic components, a display may include an exposure area (e.g., an opening, a punch hole, or a perforated hole) formed at a position facing the camera module. In general, the size of the camera exposure area may be determined by the outer diameter of a lens barrel of the camera module including a plurality of lenses. However, the lens barrel supporting the lenses may have limitations in reducing the outer diameter of the lens barrel due to a limited design structure for a wall thickness supporting the lenses.

An embodiment of the disclosure is intended to at least address the above-described problems and/or disadvantages and at least provide the advantages described below, and may provide a miniaturized lens assembly for providing good optical performance, and/or an electronic device including the same.

According to various embodiments of the disclosure, an optical system is provided which has six or more lenses with optimal powers for implementing an ultra-wide angle even if a first lens has a small effective diameter. Therefore, the electronic device may be miniaturized and/or made compact.

According to various embodiments of the disclosure, the optical system may be easy to mount on a miniaturized and/or lightweight electronic device such as a smartphone, and contribute to the extension of the optical function or improvement of the optical performance of the electronic device.

The technical objects to be achieved by the disclosure are not limited to those mentioned above, and other technical objects not mentioned may be clearly understood by those skilled in the art from the description of the disclosure.

The effects that may be obtained from the disclosure are not limited to those mentioned above, and other effects not mentioned may be clearly understood by those skilled in the art from the description of the disclosure.

It should be understood that an embodiment of the disclosure is not intended to limit the disclosure, but rather as an example. It will be obvious to those skilled in the art that various changes may be made in the form and detailed configuration without departing from the overall perspective disclosed in the disclosure, including the attached claims and their equivalents.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According embodiments, operations performed by the module, the program, or another component may be carried out sequentially, in parallel, repeatedly, or heuristically, or one or more of the operations may be executed in a different order or omitted, or one or more other operations may be added.

**Claims**

1.    A lens assembly (400; 500; 600; 700; 800) comprising:

at least six lenses (L1, L2, L3, L4, L5, L6) sequentially arranged along an optical axis (O) in a direction from an object-side (obj) toward an image-side, and including a first lens (L1) having a positive refractive power and an object-side surface (S2) formed to be convex, a second lens (L2), a third lens (L), a fourth lens (L4), a fifth lens (L5), and a sixth lens (L6) having a positive refractive power and an image-side surface (S14) formed to be concave; an image sensor (230; I) including an imaging surface (img); and an aperture (sto) disposed between the object and the first lens, wherein a central thickness of the first lens is greater than a central thickness of another lens measured with respect to the optical axis, wherein a distance (T1) between the aperture and an object-side surface (S4) of the second lens is 0.6mm to 1.4mm, and wherein the lens assembly satisfies [Conditional Expression 1] below,

[Conditional Expression 1]

$$0.8 < TTL/(IH*\tan(HFOV)) < 2$$

(where in [Conditional Expression 1], 'TTL' is a distance from the object-side surface of the first lens to the imaging surface, 'IH' is a half of a diagonal length of the image sensor, and 'HFOV' is a half angle of view of an entire optical system including the lens assembly and the image sensor.)

2. The lens assembly of claim 1, wherein the lens assembly satisfies [Conditional Expression 2] below,

[Conditional Expression 2]

$$f6/f > 1.7$$

(where f6 is an effective focal length of the sixth lens, and f is a composite effective focal length of the entire optical system including the lens assembly and the image sensor.)

3. The lens assembly of claim 1 or claim 2, wherein the lens assembly satisfies [Conditional Expression 3] below,

[Conditional Expression 3]

$$1 < L1S1/L6S2 < 4$$

(where L1S1 is a radius of curvature of the object-side surface of the first lens, and L6S2 is a radius of curvature of the image-side surface of the sixth lens.)

4. The lens assembly of any one of claims 1 to 3, wherein the object-side surface (S2) of the first lens is formed to be convex.

5. The lens assembly of any one of claims 1 to 4, wherein an object-side surface (S13) of the sixth lens is formed to be convex.

6. The lens assembly of any one of claims 1 to 5, wherein the second lens has a negative refractive power.

7. The lens assembly of any one of claims 1 to 6, wherein the fifth lens has a negative refractive power.

8. The lens assembly of any one of claims 1 to 7, wherein the third lens has a positive refractive power and a meniscus shape convex toward the image-side.

9. The lens assembly of any one of claims 1 to 8, wherein an image-side surface (S3) of the first lens is formed to be convex.

10. The lens assembly of any one of claims 1 to 9, wherein at least one surface of the first lens, the second lens, the third lens, the fourth lens, the fifth lens, or the sixth lens is formed as an aspheric surface.

11. The lens assembly of any one of claims 1 to 10, wherein each of an object-side surface and an image-side surface of at least one of the fifth lens or the sixth lens is formed as an aspheric surface.

12. An electronic device including the lens assembly of any one of claims 1 to 11.

FIG. 1

EP 4 589 354 A1

FIG. 2

FIG. 3

FIG. 4

FIG. 5

FIG. 6

LONGITUDINAL
SPHERICAL ABER.

| | |
|---|---|
| ——————— | 656.2700 NM |
| —·—·—·— | 587.5600 NM |
| ——————— | 546.0700 NM |
| — — — — — | 486.1300 NM |
| ·············· | 435.8400 NM |

1.00

0.75

0.50

0.25

-0.100  -0.050   0.0   0.050  0.100

FOCUS (MILLIMETERS)

# FIG. 7

ASTIGMATIC
FIELD CURVES

IMG HT

T          S

2.80

2.10

1.40

0.70

-0.100  -0.050   0.0   0.050   0.100

FOCUS (MILLIMETERS)

DISTORTION

IMG HT

2.80

2.10

1.40

0.70

-5.0   -2.5   0.0   2.5   5.0

% DISTORTION

FIG. 8                    FIG. 9

FIG. 10

LONGITUDINAL
SPHERICAL ABER.

| | |
|---|---|
| —————— | 656.2725 NM |
| —— · —— · | 587.5618 NM |
| —————— | 546.0740 NM |
| — — — — | 486.1327 NM |
| ·············· | 435.8343 NM |

-0.100  -0.050  0.0  0.050  0.100

FOCUS (MILLIMETERS)

FIG. 11

ASTIGMATIC
FIELD CURVES
IMG HT

DISTORTION
IMG HT

FIG. 12

FIG. 13

FIG. 14

LONGITUDINAL
SPHERICAL ABER.

| | |
|---|---|
| —————— | 656.2725 NM |
| —·—·—·— | 587.5618 NM |
| —————— | 546.0740 NM |
| —  —  —  — | 486.1327 NM |
| ············· | 435.8343 NM |

FOCUS (MILLIMETERS)

FIG. 15

ASTIGMATIC
FIELD CURVES
IMG HT

DISTORTION
IMG HT

FIG. 16

FIG. 17

FIG. 18

LONGITUDINAL
SPHERICAL ABER.

| | 656.2725 NM |
| | 587.5618 NM |
| | 546.0740 NM |
| | 486.1327 NM |
| | 435.8343 NM |

FOCUS (MILLIMETERS)

# FIG. 19

ASTIGMATIC
FIELD CURVES
IMG HT

S   T   2.80

2.10

1.40

0.70

-0.100  -0.050   0.0   0.050   0.100

FOCUS (MILLIMETERS)

DISTORTION
IMG HT

2.80

2.10

1.40

0.70

-5.0   -2.5   0.0   2.5   5.0

% DISTORTION

# FIG. 20            FIG. 21

FIG. 22

LONGITUDINAL
SPHERICAL ABER.

FIG. 23

ASTIGMATIC
FIELD CURVES
IMG HT

S   T

2.80

2.10

1.40

0.70

-0.100 -0.050   0.0   0.050   0.100

FOCUS (MILLIMETERS)

# FIG. 24

DISTORTION
IMG HT

2.80

2.10

1.40

0.70

-5.0   -2.5   0.0   2.5   5.0

% DISTORTION

# FIG. 25

## INTERNATIONAL SEARCH REPORT

| International application No. |
|---|
| **PCT/KR2023/014804** |

### A. CLASSIFICATION OF SUBJECT MATTER

**G02B 13/00**(2006.01)i; **G02B 13/18**(2006.01)i; **G03B 9/02**(2006.01)i; **G02B 3/02**(2006.01)i; **G02B 3/00**(2006.01)i; **G02B 9/62**(2006.01)i

According to International Patent Classification (IPC) or to both national classification and IPC

### B. FIELDS SEARCHED

Minimum documentation searched (classification system followed by classification symbols)

G02B 13/00(2006.01); G02B 11/32(2006.01); G02B 13/18(2006.01); G02B 7/28(2006.01); G02B 9/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제6 렌즈(sixth lens), 중심 두께(center thickness), 화각(field of view, FOV), 초점 거리(focal length), 합성 초점 거리(composite focal length), 굴절력(refractive power)

### C. DOCUMENTS CONSIDERED TO BE RELEVANT

| Category* | Citation of document, with indication, where appropriate, of the relevant passages | Relevant to claim No. |
|---|---|---|
| X | KR 10-2017-0009356 A (SAMSUNG ELECTRO-MECHANICS CO., LTD.) 25 January 2017 (2017-01-25)<br>See paragraphs [0002] and [0090]-[0104] and figures 10 and 12. | 1-12 |
| A | JP 2022-046400 A (RAYTECH OPTICAL CHANGZHOU CO., LTD.) 23 March 2022 (2022-03-23)<br>See paragraphs [0021]-[0023], [0029], [0047], [0061] and [0100] and figure 1. | 1-12 |
| A | KR 10-2020-0075794 A (SAMSUNG ELECTRO-MECHANICS CO., LTD.) 26 June 2020 (2020-06-26)<br>See paragraphs [0139]-[0144] and figures 1 and 3. | 1-12 |
| A | KR 10-2016-0046255 A (SAMSUNG ELECTRO-MECHANICS CO., LTD.) 28 April 2016 (2016-04-28)<br>See paragraphs [0104]-[0115] and figures 1 and 3. | 1-12 |
| A | KR 10-2018-0059396 A (SAMSUNG ELECTRO-MECHANICS CO., LTD.) 04 June 2018 (2018-06-04)<br>See paragraphs [0067]-[0079] and figures 1 and 4. | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 January 2024** | **15 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No.
PCT/KR2023/014804 |

| Patent document cited in search report | | | Publication date (day/month/year) | Patent family member(s) | | | Publication date (day/month/year) |
|---|---|---|---|---|---|---|---|
| KR | 10-2017-0009356 | A | 25 January 2017 | CN | 106353874 | A | 25 January 2017 |
| | | | | CN | 109031596 | A | 18 December 2018 |
| | | | | CN | 109031596 | B | 17 November 2023 |
| | | | | KR | 10-1762004 | B1 | 26 July 2017 |
| | | | | TW | 201704808 | A | 01 February 2017 |
| | | | | TW | I611205 | B | 11 January 2018 |
| | | | | US | 10444470 | B2 | 15 October 2019 |
| | | | | US | 11698513 | B2 | 11 July 2023 |
| | | | | US | 2017-0017064 | A1 | 19 January 2017 |
| | | | | US | 2019-0293912 | A1 | 26 September 2019 |
| | | | | US | 2023-0296865 | A1 | 21 September 2023 |
| JP | 2022-046400 | A | 23 March 2022 | CN | 111812820 | A | 23 October 2020 |
| | | | | CN | 111812820 | B | 27 November 2020 |
| | | | | JP | 6938752 | B1 | 22 September 2021 |
| | | | | US | 11774725 | B2 | 03 October 2023 |
| | | | | US | 2022-0075156 | A1 | 10 March 2022 |
| | | | | WO | 2022-052258 | A1 | 17 March 2022 |
| KR | 10-2020-0075794 | A | 26 June 2020 | KR | 10-2246993 | B1 | 30 April 2021 |
| KR | 10-2016-0046255 | A | 28 April 2016 | CN | 106199904 | A | 07 December 2016 |
| | | | | CN | 106199904 | B | 10 July 2020 |
| | | | | CN | 111596441 | A | 28 August 2020 |
| | | | | CN | 111596441 | B | 09 August 2022 |
| | | | | KR | 10-2126419 | B1 | 24 June 2020 |
| | | | | TW | 201616177 | A | 01 May 2016 |
| | | | | TW | 201907196 | A | 16 February 2019 |
| | | | | TW | I648553 | B | 21 January 2019 |
| | | | | TW | I684786 | B | 11 February 2020 |
| | | | | US | 10365455 | B2 | 30 July 2019 |
| | | | | US | 11249284 | B2 | 15 February 2022 |
| | | | | US | 2016-0109688 | A1 | 21 April 2016 |
| | | | | US | 2019-0293910 | A1 | 26 September 2019 |
| | | | | US | 2022-0128801 | A1 | 28 April 2022 |
| KR | 10-2018-0059396 | A | 04 June 2018 | CN | 108107544 | A | 01 June 2018 |
| | | | | CN | 108107544 | B | 08 December 2020 |
| | | | | CN | 112255770 | A | 22 January 2021 |
| | | | | CN | 112255770 | B | 24 March 2023 |
| | | | | CN | 206946080 | U | 30 January 2018 |
| | | | | KR | 10-1832627 | B1 | 26 February 2018 |
| | | | | KR | 10-2022-0098708 | A | 12 July 2022 |
| | | | | KR | 10-2022-0145306 | A | 28 October 2022 |
| | | | | KR | 10-2023-0021048 | A | 13 February 2023 |
| | | | | KR | 10-2023-0074092 | A | 26 May 2023 |
| | | | | KR | 10-2023-0132402 | A | 15 September 2023 |
| | | | | KR | 10-2416824 | B1 | 05 July 2022 |
| | | | | KR | 10-2456649 | B1 | 19 October 2022 |
| | | | | KR | 10-2494408 | B1 | 06 February 2023 |
| | | | | KR | 10-2535291 | B1 | 30 May 2023 |
| | | | | KR | 10-2574437 | B1 | 04 September 2023 |
| | | | | KR | 10-2609151 | B1 | 05 December 2023 |
| | | | | US | 10114199 | B2 | 30 October 2018 |

Form PCT/ISA/210 (patent family annex) (July 2022)

## INTERNATIONAL SEARCH REPORT
### Information on patent family members

International application No.

**PCT/KR2023/014804**

| Patent document cited in search report | Publication date (day/month/year) | Patent family member(s) | | Publication date (day/month/year) |
|---|---|---|---|---|
| | | US 10866393 B2 | | 15 December 2020 |
| | | US 11567302 B2 | | 31 January 2023 |
| | | US 2018-0149836 A1 | | 31 May 2018 |
| | | US 2019-0025553 A1 | | 24 January 2019 |
| | | US 2021-0063706 A1 | | 04 March 2021 |
| | | US 2023-0125291 A1 | | 27 April 2023 |

Form PCT/ISA/210 (patent family annex) (July 2022)